(19) Europäisches Patentamt
European Patent Office
Office européen des brevets

(11) **EP 3 073 149 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(51) Int Cl.:
*F16H 3/74* *(2006.01)*      *F16H 63/06* *(2006.01)*
*F16H 63/34* *(2006.01)*      *F16H 48/08* *(2006.01)*

(21) Anmeldenummer: **16000573.2**

(22) Anmeldetag: **09.03.2016**

(54) **FREILAUFMECHANIK**

FREEWHEEL MECHANISM

MÉCANISME DE ROUE LIBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2015 DE 102015003750**

(43) Veröffentlichungstag der Anmeldung:
**28.09.2016 Patentblatt 2016/39**

(73) Patentinhaber: **Kama, Sultan**
**90763 Fürth (DE)**

(72) Erfinder: **Kama, Nazif**
**90763 Fürth (DE)**

(74) Vertreter: **Küchler, Stefan**
**Patentanwalt**
**Färberstrasse 20**
**90402 Nürnberg (DE)**

(56) Entgegenhaltungen:
WO-A1-90/02891      DE-A1- 10 308 800
DE-B- 1 121 939      DE-T5-112009 002 196
FR-A- 516 793        US-A- 2 187 843
US-A- 2 786 369      US-A- 3 119 282

• JAHR A: "ES IST KEIN FORMSCHLUESSIGES STUFENLOSES GETRIEBE MOEGLICH", ANTRIEBSTECHNIK, VEREINIGTE FACHVERLAGE, MAINZ, DE, Bd. 28, Nr. 1, 1. Januar 1989 (1989-01-01), Seite 45/46, XP001160727, ISSN: 0722-8546
• DANIEL H: "IST EIN STUFENLOSES ECHT FORMSCHLUESSIGES GETRIEBE MOEGLICH?", ANTRIEBSTECHNIK, VEREINIGTE FACHVERLAGE, MAINZ, DE, Bd. 23, Nr. 5, 1. Januar 1984 (1984-01-01), Seite 49/50, XP001160734, ISSN: 0722-8546

**EP 3 073 149 B1**

**Beschreibung**

Die Erfindung richtet sich auf eine Freilaufmechanik in Form eines Getriebes mit Freilauf und einer mit einer Eingangsdrehzahl $\omega_E$ rotierenden Eingangswelle sowie einer mit einer Ausgangsdrehzahl $\omega_A$ rotierenden Ausgangswelle und einem dazwischen angeordneten, ersten Differential, umfassend wenigstens ein in einem ersten Umlaufradträger drehbar gelagertes, verzahntes Umlaufrad, das mit zwei internen Zahnkränzen an zwei weiteren Drehanschlüssen des ersten Differentials kämmt, deren Drehzahlen $\omega_{12}$, $\omega_{13}$ die Drehzahl $\omega_{11}$ des ersten Umlaufradträgers in dem ersten Differential bestimmen zu: $\omega_{11} = \frac{1}{2} * (\omega_{12} + \omega_{13})$.

Eine derartige Anordnung ist der deutschen Patentschrift DE 1 111 954 B zu entnehmen, die ein Getriebe für ein Motorfahrzeug betrifft, wobei mittels eines Differentials eine Leistungsverzweigung zu den vorderen und hinteren Fahrzeugrädern vorgenommen wird. Wie bei dem ersten Differential der vorliegenden Erfindung, so ist auch bei der DE 1 111 954 B das verwendete Differential symmetrisch, d.h., die beiden Drehanschlüsse mit den internen Zahnkränzen, welche mit wenigstens einem verzahnten Umlaufrad kämmen, sind spiegelbildlich zueinander angeordnet, also baugleich jedenfalls hinsichtlich Umfang und Zähnezahl. Der Umlaufradträger kann durch ein vorgeschaltetes Schaltgetriebe in verschiedenen Gängen mit zwei unterschiedlichen Drehzahlen und ggf. sogar mit einem Rückwärtsgang mit entgegengesetzter Drehzahl angetrieben werden. Mit in dem Umlaufradträger gelagerten Kegelrädern kämmende, interne Zahnkränze sind über je einen Freilauf mit je einem Dehanschluss gekoppelt. Diese Freiläufe sind mit ihrem jeweils anderen Anschluss an je ein mit einer angetriebenen Welle des Schaltgetriebes drehfest gekoppeltes Hohlrad angeschlossen. Die Übersetzung zwischen der Welle des Schaltgetriebes und den Hohlrädern der Freiläufe sind derart bemessen, dass die Hohlräder mit einer etwas größeren Drehzahl - bspw. 105 % oder 110 % - umlaufen als die mit den internen Verzahnungen versehenen Drehanschlüsse im synchronen Betrieb des Differentials. Unterhalb dieser erhöhten Drehzahl befinden sich die Freiläufe im Freilaufzustand und lassen eine unterschiedliche Drehzahl an beiden Ausgängen des Differentials zu. Falls jedoch die Drehzahl an einer Ausgangswelle des Getriebes - also an der Welle zu den vorderen oder hinteren Fahrzeugrädern - auf höhere Werte anzusteigen versucht, blockiert der betreffende Freilauf, sobald von einer dieser Ausgangswellen die etwas größere Drehzahl an dem Hohlrad des betreffenden Freilaufs erreicht wird, schaltet dieser in den Sperrzustand, koppelt also die betreffende Ausgangswelle an das dortige Hohlrad und sorgt damit dafür, dass die Drehzahl der Ausgangswelle auf die solchermaßen dynamisch eingestellte Grenzdrehzahl beschränkt bleibt. Da die Drehzahl der Hohlräder über die angetriebene Welle des Schaltgetriebes von der Drehzahl der Eingangswelle abgeleitet wird, ist die Grenzdrehzahl nicht statisch vorgegeben, sondern dynamisch abhängig von der jeweiligen Drehzahl der Eingangswelle. Mit anderen Worten, die Drehzahl an jeder Ausgangswelle kann niemals auf beliebig hohe Werte ansteigen, insbesondere auch dann nicht, wenn bei einer extremen Kurvenfahrt die Vorderräder einen erheblich längeren Weg zurückzulegen haben als die Hinterräder. Ein Nachteil ist jedoch, dass im Falle eines blockierenden Freilaufs sich die Kräfteverhältnisse im Differential nicht mehr frei einstellen können, weil dessen (Relativ-) Drehzahlen durch die Blockade vollständig vorgegeben sind. Wird beispielsweise die Grenzdrehzahl $\omega_{12} = 1,1 * \omega_{11}$ durch den blockierenden Vorlauf vorgegeben, so folgt daraus wegen $\omega_{11} = \frac{1}{2} * (\omega_{12} + \omega_{13})$ gleichzeitig für die Drehzahl $\omega_{13} = 2 * \omega_{11} - 1,1 * \omega_{11} = 0,9 * \omega_{11}$. Stimmt dieses Verhältnis nicht mit dem Verhältnis zwischen den von den Vorder- und Hinterrädern zurückzulegenden Wegen überein, so ist dadurch mindestens ein Rad gezwungen, nicht mehr auf dem Boden abzurollen, sondern zu rutschen. Dabei wird nicht nur das Profil von dem jeweiligen Rad radiert; vielmehr ist dann auch die Lenkbarkeit bzw. Spurstabilität des betreffenden Rades nicht mehr gegeben.

Bei dem Stand der Technik ist also trotz der integrierten Freiläufe die Drehzahl der Ausgangswellen stets in einem engen Spielraum vorgegeben. Betrachtet man einen Gang mit dem Übersetzungsverhältnis $ü_V = \omega_{11}/\omega_E$ zwischen der synchronen Ausgangsdrehzahl $\omega_{11}$ des Differentials und der Eingangsdrehzahl $\omega_E$, so folgt für jede Ausgangsdrezahl $\omega_A = \omega_{12}$ oder $\omega_{13}$: $0,9 * ü_V * \omega_E \leq \omega_A \leq 1,1 * ü_V * \omega_E$. Damit ist u.a. ausgeschlossen, dass während der Fahrt ein echter Freilaufzustand auftritt, also beispielsweise dass bei Wegnehmen des Gases die Motor- oder Eingangsdrezahl des Getriebes $\omega_E$ gegenüber der Ausgangsdrehzahl $\omega_A$ des Getriebes stärker absinkt, ohne eben diese Ausgangsdrehzahl $\omega_A$ abzubremsen. Will eine Person also bei einer längeren Autobahnfahrt Sprit sparen und dazu das Gas zurücknehmen, ist sie stets gezwungen, in den Leerlauf zu schalten oder zumindest auszukuppeln, um die drehzahlmäßige Kopplung zwischen dem Motor und den angetriebenen Rädern des Fahrzeugs aufzutrennen. Ohne diese Maßnahme tritt stets der eher selten benötigte Effekt der sogenannten "Motorbremse" ein. Um diesen zumeist negativ empfundenen Effekt zu mindern, wird bei modernen Fahrzeugen zumeist die Treibstoffzufuhr zu dem Motor derart geregelt, dass bei einer vorgegebenen Drehzahl kein spürbarer Bremseffekt auftritt; diese Maßnahme erhöht den Kraftstoffverbrauch aber nicht unbeträchtlich.

Ferner ist aus dem Stand der Technik noch die DE 42 05 260 C1 bekannt, wo zwischen einer Eingangswelle und einer Ausgangswelle zwei Differentiale vorgesehen sind. Der Umlaufradträger eines dieser Differentiale ist mit der Eingangswelle gekoppelt, der Umlaufradträger des anderen Differentials mit der Ausgangswelle. Beide Differentiale verfügen über jeweils zwei in dem betreffenden Umlaufradträger um radiale Achsen drehbar gelagerte, verzahnte Umlaufräder, welche mit zwei internen Zahnkränzen an zwei weiteren Drehanschlüssen des betreffenden Differentials kämmen. Die beiden Differentiale sind untereinander auf doppeltem Wege miteinander gekoppelt, einmal derart, dass die beteiligten Drehanschlüsse beider Differentiale gleichsinnig rotieren sowie mit gleicher Drehzahl, ein andermal derart, dass die beteiligten Drehanschlüsse beider Differentiale ebenfalls mit gleicher Drehzahl rotieren, jedoch in entgegengesetzter Drehrichtung. Bei dieser Anordnung ist ein Zugriff auf die beiden Kopplungen zwischen den beiden Differentialen vorgesehen, indem auf jene drehmomentmäßig eingewirkt wird, um die Ausgangsdrehzahl gegenüber der Eingangsdrehzahl kontinuierlich zu verstellen. Für eine solche kontinuierliche Verstellung ist in jedem Koppelzweig eine hinsichtlich ihres Pumpendruckes kontinuierlich regelbare Hydraulikpumpe integriert, um jeden der beiden Koppelzweige stufenlos abbremsen zu können. Eine irgendwie geartete Freilauffunktion ist bei diesem Dokument weder offenbart noch realisierbar; mangels einer solchen Freilauffunktion handelt es sich hierbei um einen weiter ab liegenden Stand der Technik.

Aus den Nachteilen des beschriebenen Standes der Technik resultiert das die Erfindung initiierende Problem, ein gattungsgemäßes Getriebe - beispielsweise zur Anwendung in einem Kraftfahrzeug - mit einer integrierten Freilauffunktion zu schaffen bzw. derart weiterzubilden, dass damit bei einem Schiebebetrieb keine Motorbremsfunktion auftritt. Mit anderen Worten, während antreibende Drehmomente in der Antriebsdrehrichtung von der Eingangswelle zur Ausgangswelle möglichst unvermindert weitergeleitet werden sollen, soll ein durchziehendes Drehmoment von der Ausgangswelle nicht mit der Eingangswelle gekoppelt werden, sondern soll in die Lage versetzt werden, die Ausgangswelle sowie eine ggf. daran angekoppelte Einrichtung von einem an der Eingangswelle angekoppelten Antriebsmotor ungebremst weiter zu beschleunigen.

Die Lösung dieses Problems gelingt durch ein zweites Differential, umfassend wenigstens ein in einem zweiten Umlaufradträger drehbar gelagertes, verzahntes Umlaufrad, das mit zwei internen Zahnkränzen an zwei weiteren Drehanschlüssen des zweiten Differentials kämmt, deren Drehzahlen $\omega_{22}$, $\omega_{23}$ die Drehzahl $\omega_{21}$ des zweiten Umlaufradträgers in dem zweiten Differential bestimmen zu: $\omega_{21} = \frac{1}{2} * (\omega_{22} + \omega_{23})$; wobei ein Drehanschluss des ersten Differentials, dessen interner Zahnkranz mit wenigstens einem Umlaufrad des ersten Differentials kämmt, mit einem der drei Drehanschlüsse des zweiten Differentials derart gekoppelt ist, dass diese beiden miteinander gekoppelten Drehanschlüsse mit der selben Drehzahl rotieren; und wobei ein weiterer Drehanschluss des ersten Differentials, dessen interner Zahnkranz mit wenigstens einem Umlaufrad des ersten Differentials kämmt $\omega_{12}$,$\omega_{13}$, mit einem weiteren der drei Drehanschlüsse des zweiten Differentials derart gekoppelt ist, dass diese beiden miteinander gekoppelten Drehanschlüsse mit entgegengesetzt gleichen Drehzahlen rotieren; wobei ferner wenigstens ein Umlaufradträger des ersten oder zweiten Differentials weder mit der Eingangswelle noch mit der Ausgangswelle gekoppelt oder integriert ist; und wobei schließlich die beiden miteinander gekoppelten Drehanschlüsse des ersten und zweiten Differentials, welche aufgrund ihrer Kopplung mit der selben Drehzahl und mit dem selben Drehsinn rotieren, weder mit der Eingangswelle noch mit der Ausgangswelle gekoppelt oder integriert sind.

Erfindungsgemäß wird demnach das erste Differential ergänzt durch ein zweites Differential, so dass an dem zweiten Differntial die beiden, in dem ersten Differential verzweigten Leistungsflüsse wieder vereinigt und schließlich einer gemeinsamen Ausgangswelle zugeführt werden können, wie dies beispielsweise auch in der FR 516 793 A gezeigt ist. Dadurch ist die eigentliche Differentialfunktion, also die Aufteilung einer Antriebsleistung auf zwei Teil-Leistungen, an dem Ausgang nicht mehr spürbar. Stattdessen wird durch die vorübergehende Aufspaltung des Leistungsflusses in zwei Leistungsflüsse ein zusätzlicher, interner Freiheitsgrad der Bewegung geschaffen, mit dem Ziel, die Übertragungskennlinie zwischen Eingangs- und Ausgangswelle flexibler zu gestalten und dabei insbesondere derart, dass für die Ausgangswelle stets gilt:

$$|\omega_A| \geq |ü * \omega_E|.$$

Infolge dieser Übertragungsfunktion bremst die Eingangswelle die Ausgangswelle in der jeweiligen Antriebsdrehzahl nicht ab, selbst dann, wenn sie im Verhältnis zu der Ausgansdrehzahl $\omega_A$ mit einer im Verhältnis zum gewählten oder vorgegebenen Übersetzungsverhältnis ü langsamer laufenden Eingangsdrehzahl $\omega_E$ läuft, weder auf den Wert $\omega_A = ü * \omega_E$, noch auf einen anderen Grenzwert $\omega_A = \varepsilon * ü * \omega_E$, mit beliebigem $\varepsilon > 1$.

Hierbei ist ferner zu beachten, dass der Drehzahl-Grenzwert, oberhalb desselben der Freilaufzustand auftritt, dynamisch ist, also von der Eingangsdrehzahl $\omega_E$ abhängt, nämlich stets bei ü * $\omega_E$, liegt.

Mehr noch: Die Freilauffunktion kann auch bei negativen Drehzahlen $\omega_A < 0$ am Ausgang auftreten, sofern $\omega_E < 0$ oder ü $< 0$, allerdings dann bei Ausgangsdrehzahlen $\omega_A = -|\omega_A| \leq -|ü * \omega_E|$, also unterhalb der negativen, "synchronen" Ausgangsdrehzahl $-|ü * \omega_E|$.

Mit anderen Worten, der Freilaufeffekt kann sowohl bei Vorwärtsfahrt auch bei Rückwärtsfahrt eines mit der erfindungsgemäßen Freilaufmechanik ausgerüsteten Fahrzeugs auftreten.

Diese Funktionalität wird insbesondere dadurch erreicht, dass ein Drehanschluss des ersten Differentials mit einer Drehzahl $\omega_{12}$, $\omega_{13}$ an einen der drei Drehanschlüsse mit einer Drehzahl $\omega_{21}$, $\omega_{22}$, $\omega_{23}$ des zweiten Differentials derart gekoppelt ist, dass diese beiden miteinander gekoppelten Drehanschlüsse mit der selben Drehzahl rotieren;

während ein weiterer Drehanschluss des ersten Differentials mit einer Drehzahl $\omega_{13}$, $\omega_{12}$ an einen weiteren der drei Drehanschlüsse des zweiten Differentials mit einer Drehzahl $\omega_{21}$, $\omega_{22}$, $\omega_{23}$ derart gekoppelt ist, dass diese beiden miteinander gekoppelten Drehanschlüsse mit entgegengesetzt gleichen Drehzahlen rotieren. Demnach ist das Übertragungsverhältnis in einem Leistungszweig +1, in dem anderen dagegen -1. Diese unterschiedlichen, einander entgegengesetzten Übertragungsverhältnisse in den beiden Koppelzweigen zwischen erstem und zweitem Differential bilden eine erste Asymmetrie im Leistungsfluss der Anordnung.

Indem wenigstens einer derjenigen beiden Drehanschlüsse des ersten Differentials, welche jeweils eine interne Zahnreihe aufweisen, die mit einem gemeinsamen Umlaufrad kämmt, von außen unbeeinflusst bleibt, kann sich dessen Drehzahl frei einstellen, insbesondere entgegengesetzt gleich dem anderen, über eine interne Verzahnung mit dem gemeinsamen Umlaufrad gekoppelten Drehanschluss des ersten Differentials, ggf. zusätzlich der doppelten Drehzahl $\omega_{11}$ des ersten Umlaufradträgers. "Von außen unbeeinflusst" meint in diesem Zusammenhang insbesondere, dass an dem betreffenden Drehanschluss weder ein Freilauf angeschlossen ist noch eine kontinuierlich wirkende Bremse oder ein Antrieb.

Durch die Unterlassung einer kontinuierlichen Einwirkung auf wenigstens einen der beiden mit dem zweiten Differential gekoppelten Drehanschlüsse des ersten Differentials kann sich seine Drehzahl frei, also insbesondere entgegengesetzt gleich dem anderen, mit dem zweiten Differential gekoppelten Drehanschluss des ersten Differentials, ggf. zusätzlich der doppelten Drehzahl des ersten Umlaufradträgers, einstellen, was sich gerade dann bemerkbar macht, wenn auf die Ausgangswelle und/oder auf wenigstens einen Drehanschluss des zweiten Differentials ein in dessen Drehrichtung arbeitendes Mit-Drehmoment einwirkt; dann kann sich unter dem Einfluss dieses Mit-Drehmomentes die Ausgangsrehzahl erhöhen, ohne dass die Eingangsdrehzahl davon beeinflusst wird. Dies ist die erfindungsgemäße Freilauffunktion, die dabei ohne jegliche Auftrennung des Leistungsflusses erfolgt, so dass zum Umschalten zwischen der Antriebsfunktion und der Freilauffunktion keinerlei Einflussnahme innerhalb des Getriebes erforderlich ist. Es handelt sich vielmehr nur um zwei unterschiedliche Zustände, die sich als unterschiedlichen Vorzeichen der Drehrichtungen und Drehmomente resultieren; der Übergang zwischen diesen beiden Zuständen des Getriebes erfordert keinerlei Veränderung von dessen Struktur und somit auch keinerlei externe Einflussnahme, sondern erfolgt automatisch bei einer entsprechenden Änderung der Betriebsparameter, insbesondere von Antriebs- und Lastmoment im Verhältnis zur Drehzahl.

Offensichtlich resultiert diese inhärente Freilauffunktion aus einer zusätzlichen, zweiten Asymmetrie der Anordnung - abgesehen von der ersten Asymmetrie, welche durch die unterschiedlichen Übertragungsverhältnisse +1 und -1 in den beiden Koppelzweigen zwischen erstem und zweitem. Differential gebildet wird - was sich darin niederschlägt, dass zumindest ein Umlaufradträger des ersten oder zweiten Differentials weder mit der Eingangs- noch mit der Ausgangswelle integriert oder unmittelbar gekoppelt ist. Mit anderen Worten, die Drehzahl wenigstens eines Umlaufradträgers kann sich unabhängig von der Drehzahl der Eingangs- und Ausgangswelle einstellen, ist also nicht zwangsläufig proportional zu einer der Drehzahlen der Eingangs- und Ausgangswelle.

Zwischen der Eingangs- und Ausgangswelle befindet sich also mindestens eine zweite Asymmetrie des Leistungsflusses. Diese äußert sich bei der Beschaltung der Differentiale, indem jedenfalls nicht der Umlaufradträger des ersten Differentials mit der Ein- oder Ausgangswelle des Getriebes und gleichzeitig der Umlaufradträger des über zwei unterschiedliche Koppelzweige an das erste Differential gekoppelten, zweiten Differentials mit der jeweils anderen Ausgangs- oder Eingangswelle des Getriebes integriert oder drehfest gekoppelt ist.

Falls mehr als zwei Differentiale vorhanden sind, soll insgesamt mindestens ein Differential derart beschalten sein, dass im normalen Betrieb die Leistungsflüsse nicht symmetrisch zu dem mittleren Umlaufradträger verlaufen, also nicht beide Leistungsflüsse zu diesem hin, aber auch nicht beide Leistungsflüsse von jenem weg. Anders ausgedrückt soll bei diesem asymmetrichen Differential nicht der zentrale Umlaufradträger als einziger Drehanschluss Energie von der Antriebsseite aufnehmen und auch nicht als einziger Drehanschluss Energie an die Abtriebsseite abgeben.

Laut Definition im Hauptanspruch ist das erste Differential - welches nicht mit der Antriebswelle gekoppelt sein muss - symmetrisch beschalten. Demnach sollte wenigstens eines der übrigen Differentiale, also das zweite oder ein drittes oder viertes, asymmetrisch beschalten sein, um die erfindungsgemäße Doppelfunktion - Antrieb bei einem überwiegenden Antriebsdrehmoment auf der Antriebswelle sowie Freilauf bei einem durchziehend beschleunigenden Drehmoment auf der Abtriebswelle - zu realisieren.

Andererseits kann der Umlaufradträger in einem der beiden Differentiale drehfest mit der Eingangswelle gekoppelt sein. Dadurch kann bei Stillstand der Eingangswelle, also bei $\omega_E = 0$, für das daran gekoppelte Differential, im Falle $\omega_{11} = 0$ bzw. $\omega_{21} = 0$ gelten: $\omega_{12} = -\omega_{13}$, bzw.: $\omega_{22} = -\omega_{23}$.

Demnach gibt es also einen internen Zustand, bei welchem ein äußeres, auf die Ausgangswelle einwirkendes, antreibendes Lastmoment von dort her von dem Getriebe aufgenommen werden kann und zu einer Rotation in beiden internen Leistungszweigen führt, während für die Eingangswelle gilt: $\omega_E = ü * \omega_{11} = 0$. Mit anderen Worten, am Ausgang kann ein durchziehendes Lastmoment ohne Blockade der Ausgangswelle einwirken, selbst wenn ein Antriebsmotor steht, also $\omega_M = \omega_E = 0$. Damit könnte - beispielsweise bei einem Elektrofahrzeug - der Antriebsmotor während der fahrt vollkommen stillgesetzt werden bis zu $\omega_M = 0$, ohne dass eine Motorbremse wirksam wird. Der Schwung der bewegten Masse des Fahrzeugs hält dann dasselbe in Bewegung, bis aufgrund von Luftwiderstand, Rollreibung und ggf. anderen Reibungseffekten die Drehzahl allmählich absinkt und der Fahrer wieder beschleunigen möchte. Dann genügt einfach ein Druck auf das Gaspedal, um den Antriebsmotor wieder hochzubeschleunigen, und sobald die Drehzahl $\omega_E = \omega_A / ü$ erreicht ist, wird das Fahrzeug wieder beschleunigt.

Im Rahmen der Erfindung können die beiden Differentiale baugleich sein, insbesondere für die selbe Leistung ausgelegt sein, und ein oder beide Differentiale können vorzugsweise derart symmetrisch aufgebaut sein, dass die beiden, mit wenigstens einem gemeinsamen Umlaufrad kämmenden, internen Zahnreihen eines Differentials jeweils den selben Radius und die selbe Zähnezahl aufweisen.

Es hat sich als günstig erwiesen, dass die erfindungsgemäße Freilaufmechanik bzw. das erfindungsgemäße Getriebe mit Freilauffunktion keine Hilfsenergie verbraucht. Da insbesondere auf wenigstens einen Drehanschluss des ersten Differentials, welcher über eine interne Zahnreihe verfügt, die mit einem umlaufenden Zahnrad kämmt, vorzugsweise auf beide derartigen Drehanschlüsse des ersten Differentials keine äußere Einwirkung vorgenommen wird, ist keinerlei Hilfsenergie erforderlich, weder zum Betrieb einer Bremse oder eines Hilfsantriebs oder einer sonstigen Stelleinrichtung. Daher ist dessen Einsatz kaum eingeschränkt und kann insbesondere auch überall dort erfolgen, wo keinerlei Hilfsenergie zur Verfügung steht..

Aus dem selben Grund kann die erfindungsgemäße Freilaufmechanik bzw. das erfindungsgemäße Getriebe mit Freilauffunktion vorzugsweise vollkommen auf Stellglieder und steuerbare Elemente verzichten. Die Mechanik funktioniert ohne jegliche Beeinflussung von außen.

Ferner kann die erfindungsgemäße Freilaufmechanik bzw. das erfindungsgemäße Getriebe mit Freilauffunktion ungeregelt sein, vorzugsweise auch ungesteuert. Die erfindungsgemäße Funktion resultiert ausschließlich durch die Art der Zusammenschaltung wenigstens zweier Differentiale und bedarf in seiner Grundfunktion weder einer Regelung noch einer Steuerung.

Bevorzugt ist die erfindungsgemäße Freilaufmechanik bzw. das erfindungsgemäße Getriebe mit Freilauffunktion in einem Gehäuse angeordnet, welches nur Durchbrüche für eine Eingangswelle und eine Ausgangswelle aufweist, sowie ggf. für das Befüllen mit einem Schmiermittel oder das Ablassen desselben. Da weder eine Zufuhr irgendwelcher Hilfsenergie notwendig ist noch die Einleitung von Steuer- oder Reglersignalen und auch keine Ausleitung von Sensorsignalen, sind keine Schlauch- oder Rohr- oder Kabelanschlüsse erfrderlich, und auch keine Anschlüsse für mechanische Steuerelemente od. dgl.

Vorzugsweise ist ein das Getriebe umgebendes Gehäuse abgedichtet, insbesondere im Bereich des Durchtritts der Ein- und Ausgangswelle sowie ggf. im Bereich einer Trennfuge zwischen verschiedenen Gehäuseteilen, welche für die Montage, Wartung und Demontage der erfindungsgemäßen Freilaufmechanik voneinander entfernbar sind. An den Eingangs- und Ausgangswellen können Wellendichtringe vorgesehen sein. Zwischen verschiedenen Gehäuseteilen lässt sich eine Abdichtung mit eingelegten Dichtungen, bspw. Gummidichtungen, erreichen. Dadurch besteht die Möglichkeit, das Gehäuse ganz oder teilweise mit einem Schmiermittel zu befüllen, insbesondere mit Schmierfett. Zum Befüllen mit Schmierfett können an dem Gehäuse ein oder mehrere Schmiernippel vorgesehen sein. Ein Austausch eines flüssigen Schmiermittels wie Schmieröl wird durch eine Ölablassschraube an dem Gehäuse ermöglicht.

Erfindungsgemäß können ein oder beide Differentiale als Kronenradgetriebe ausgebildet sein, bzw. unter Verwendung von Kronenrädern. Kronenradgetriebe leisten auch eine drehbewegliche Kopplung von Drehbewegungen mit zueinander rechtwinklig stehenden Drehachsen und haben dabei im Allgemeinen eine geringere Rollreibung als miteinander kämmende Kegelräder.

Ferner sieht die Erfindung vor, dass ein oder beide oder alle Differentiale mit einer durchgehenden Achse oder Welle aufgebaut sind, die im Bereich ihrer beiden Enden gelagert ist. Dadurch kann ein unwuchtfreier oder zumindest unwuchtarmer Gleichlauf aller drehenden Teile gewährleistet werden, wobei dennoch die Anzahl der dafür notwendigen Lagerungen minimal ist.

Die durchgehende Welle ist erfindungsgemäß mit einem der drei voneinander unabhängigen, aber zueinander koaxialen Drehteile des betreffenden Differentials gekoppelt sein, also mit dem Umlaufradträger oder mit einem der beiden seitlichen Drehanschlüsse; die jeweils anderen Drehteile des Differentials sind dann auf der durchgehenden Welle drehbar gelagert, vorzugsweise mit je einem oder mehreren Wälzlagern. Die Welle selbst muss in diesem Fall in dem Gehäuse drehbar gelagert sein und dreht sich mit einem der drei zueinander koaxialen Drehteile mit. Die Welle kann genutzt werden, um ein Drehmoment von dem damit verbundenen Anschluss des Differentials mit einem daran angeschlossenen Zahnrad zu übertragen.

Eine bevorzugte Konstruktionsvorschrift besagt, dass das Getriebe einer erfindungsgemäßen Freilaufmechanik auf ein festes Übersetzungsverhältnis $ü = \omega_A/\omega_E$ eingestellt ist, so dass für die Ausgangsdrehzahl $\omega_A$ gilt:

$$\omega_A = ü * \omega_E,$$

solange auf die Ausgangswelle und/oder auf wenigstens einen Drehanschluss des zweiten Differentials kein äußeres Drehmoment oder ein entgegen dessen Drehrichtung arbeitendes Gegen-Drehmoment einwirkt. Es gibt also keine von außen wahrnehmbare Differentialfunktion, bei der ja die Drehzahl einer Ausgangswelle $\omega_{A1}$ in Abhängigkeit von der Drehzahl einer anderen Ausgangswelle $\omega_{A2}$ schwanken kann und also kein festes Übersetzungsverhältnis ü zu der Drehzahl $\omega_E$ der Eingangswelle besteht; vielmehr gilt ja bei einer Differentialfunktion $\omega_{A1} + \omega_{A2} = 2 * \omega_E$.

Das Übersetzungsverhältnis ü des Getriebes einer erfindungsgemäßen Freilaufmechanik könnte bei unterschiedlichen Gängen eines integrierten oder unmittelbar vor- oder nachgeschalteten Schaltgetriebes stufenartig variieren, bleibt aber selbst dann bei einem eingelegten Gang solange konstant, bis der Gang gewechselt wird; im Normalfall ist jedoch ein Schaltgetriebe nicht mit der erfindungsgemäßen Freilaufmechanik integriert, so dass dessen Übersetzungsverhältnis ü zwischen dessen Eingangs- und Ausgangswelle konstant ist. Insbesondere ist eine stufenlose Verstellung des Übersetzungsverhältnisses ü entgegen der Anordnung in der DE 42 05 260 C1 nicht Bestandteil der vorliegenden Erfindung.

Gemäß einer bevorzugten Ausprägung der Erfindung gilt bei einem äußeren Mit-Drehmoment an der Ausgangswelle oder an wenigstens einem Drehanschluss des zweiten Differentials in der jeweiligen Ausgangsdrehrichtung:

$$|\omega_A| > |\ddot{u} * \omega_E|.$$

Mit anderen Worten, ein derartiges Mit-Drehmoment kann die Ausgangswelle in der jeweiligen Ausgangs-Drehrichtung weiter beschleunigen auf größere Drehgeschwindigkeiten als $|\ddot{u} * \omega_E|$, wirkt aber nicht auf die Eingangswelle zurück. Dies entspricht einer Freilauffunktion, ohne dass dazu jedoch der Verzahnungseingriff zwischen Eingangs- und Ausgangswelle aufgehoben wird. Vielmehr erfolgen solchenfalls die Rückkopplung in den beiden Teil-Leistungszweigen mit entgegengesetzter Phase, was bei der Vereinigung innerhalb des ersten Differentials eine vollständige Kompensation zur Folge hat und somit keinen Einfluss auf die Eingangswelle zulässt.

Zu diesem Zweck ist eine erste, drehbewegungsmäßige Kopplung zwischen unterschiedlichen Differentialen vorgesehen, vorzugsweise zwischen je einem nicht mit dem jeweiligen Umlaufradträger gekoppelten Drehanschluss unterschiedlicher Differentiale, bevorzugt eine derartige Kopplung, dass die Drehzahlen der solchermaßen miteinander gekoppelten Drehanschlüsse identisch sind.

Andererseits ist eine zweite, drehbewegungsmäßige Kopplung zwischen unterschiedlichen Differentialen vorgesehen, vorzugsweise derart, dass die Drehzahlen der miteinander gekoppelten Drehanschlüsse entgegengesetzt identisch sind.

Für eine optimale Wirkungsweise sollte die Eingangswelle mit dem ersten Differential gekoppelt sein, vorzugsweise auf symmetrische Weise, d.h. insbesondere, nur mit dessen Umlaufradträger. Von hier verzweigt sich die Eingangsleistung auf die beiden Leistungszweige und wird erst am zweiten Differential wieder vereinigt, insbesondere auch dann, wenn alle Drehteile des ersten Differentials synchron miteinander umlaufen.

Ferner empfiehlt die Erfindung, dass die Ausgangswelle mit dem zweiten Differential gekoppelt ist, vorzugsweise auf asymmetrische Weise, d.h. insbesondere, nicht oder nicht allein mit dessen Umlaufradträger. Durch eine asymmetrische Ankopplung kann erreicht werden, dass eine am Ausgang eingespeiste Leistung nicht zu einem synchronen Umlaufen aller Drehteile des zweiten Differentials führen kann. Die am Ausgang eingespeiste Leistung teilt sich vielmehr derart auf, dass die Teil-Leistungen sich in dem ersten Differential an der Eingangswelle nicht addieren, sondern gegenseitig kompensieren, indem sie an den mit den internen Verzahnungen versehenen Drehanschlüssen des ersten Differentials entgegengesetzt gleiche Umdrehungszahlen hervorrufen.

Eine derartige, asymmetrische Ankopplung an das zweite Differential lässt sich dadurch bewerkstelligen, dass die Ausgangswelle wenigstens mit einem Drehanschluss des zweiten Differentials gekoppelt ist, dessen interner Zahnkranz mit wenigstens einem verzahnten Umlaufrad kämmt. Die Ausgangswelle sollte also nicht unmittelbar an den Umlaufradträger des zweiten Differentials gekoppelt sein.

Andererseits kann die Ausgangswelle auch an ein drittes oder viertes Differential gekoppelt sein. Damit lässt sich ebenfalls eine asymmetrische Ankopplung an das zweite Differential erreichen.

Sofern ein drittes Differential vorhanden ist, so wird unter diesem Gesichtspunkt empfohlen, dieses mit zwei Drehanschlüssen des zweiten Differentials zu koppeln, vorzugsweise auf asymmetrische Weise, also mit dessen Umlaufradträger einerseits sowie andererseits mit einem Drehanschluss des zweiten Differentials, dessen interner Zahnkranz mit wenigstens einem verzahnten Umlaufrad des zweiten Differentials kämmt.

Ferner besteht die Möglichkeit, durch Einflussnahme auf ein einziges Koppelzahnrad zwischen dem ersten und zweiten Differential die Freilauffunktion auszuschalten. Die Freilauffunktion erfordert ja, dass von der Ausgangswelle her zwei Teil-Leistungen zum ersten Differential übertragen werden, welche sich dort kompensieren können. Wird jedoch einer dieser beiden Teil-Leistungsströme unterbrochen, beispielsweise indem ein dazu erforderliches Koppelzahnrad stillgesetzt wird, so gelangt nur noch ein Teil-Leistungsstrom zum ersten Differential und erfährt dort keine Kompensation, wirkt also auf die Eingangswelle zurück - es gibt keine Freilauffunktion mehr.

Um die Freilauffunktion auszuschalten, kann ein (Koppel-) Zahnrad in wenigstens einem Koppelzweig in einen undrehbaren Zustand versetzt werden. In Ermangelung einer Drehbewegung kann keine mechanische Leistung über das betreffende (Koppel-) Zahnrad hinweg übertragen werden. Zum Blockieren eines (Koppel-) Zahnrades sieht die Erfindung vor, dass das betreffende (Koppel-) Zahnrad an einer mehrfach abgekröpften Welle gelagert ist, die wiederum exzentrisch in wenigstens einer verdrehbaren, vorzugsweise kreisförmigen Scheibe gelagert ist, insbesondere mit einem gegenüber dem das (Koppel-) Zahnrad tragenden Abschnitt abgekröpften Bereich dieser Welle. Wenn dabei die von der Abkröpfung herrührende Exzentrizität der Exzentrizität in der verdrehbaren Scheibe entspricht, so kann durch Verschwenken einer die Scheibe lagernden Halterung um eine weitere Schwenkachse, die weder mit der Achse des (Koppel-) Zahnrades noch mit der Achse der kreisförmigen Scheibe zusammenfällt, einerseits Achse der kreisförmigen Scheibe in eine gemeinsame Flucht mit der Achse des (Koppel-) Zahnrades gedreht werden, so dass das (Koppel-) Zahnrad zusammen mit der kreisförmigen Scheibe in deren Lagerung rotieren kann. Wird dagegen durch ein weiteres Schwenken diese Flucht aufgehoben, so ist dies nicht möglich, und das (Koppel-) Zahnrad ist blockiert. Für diese Funktion ist es vorteilhaft, dass das (Koppel-) Zahnrad unverdrehbar auf der abgekröpften Welle fixiert ist.

Erfindungsgemäß ist weiterhin vorgesehen, dass wenigstens eine Kopplung zwischen dem ersten Differential und dem zweiten Differential, vorzugsweise diejenige Kopplung, deren miteinander gekoppelte Drehanschlüsse des ersten und zweiten Differentials aufgrund dieser Kopplung mit der selben Drehzahl und mit dem selben Drehsinn rotieren, insbesondere beide Kopplungen zwischen jenen Differentialen, von außen weder zugänglich noch beeinflussbar ist (sind). Da im Rahmen der vorliegenden Erfindung keine stufenlose Verstellbarkeit des Getriebeübersetzungsverhältnisses ü angestrebt wird, sondern nur eine von den Drehmomentverhältnissen abhängige Auswahl von zwei dem Getriebe inhärenten Funktionszuständen, nämlich Drehmomentübertragung einerseits und Freilauffunktion andererseits, was automatisch, also ohne äußere Einflussnahme erfolgt, insbesondere auch ohne Auftrennung irgendeines Verzahnungseingriffs und auch ohne jegliches Ausrücken sonstiger, drehbeweglich miteinander gekoppelter Getriebeteile, ist ein externer Zugang zu einem oder beiden Koppelzweigen überflüssig und könnte allenfalls die Funktionsweise des erfindungsgemäßen Getriebes stören.

Allenfalls um die Freilauffunktion generell auszuschalten, also um zwangsweise die inhärente, im normalen Betriebszustand des Getriebes stets aktive Wahlfunktion des Getriebes zwischen Antriebs- und Freilaufzustand permanent zu unterdrücken, zugunsten des dann ständig angewählten Antriebszustandes, könnte eine Einflussnahme auf eine Koppeleinrichtung erfolgen. Eine solche permanente Unterdrückung des Freilaufzustandes sollte allenfalls über eine verschwenkbare und/oder verschiebbare Ringlünette erfolgen, welche mit einem Bereich einer mehrfach abgekröpften Welle eines Zahnrades der betreffenden Kopplung zusammenwirkt, welcher exzentrisch zu der Drehachse dieses Zahnrades verläuft.

Im Rahmen eines ersten Anwendungsfalles der Erfindung kann eine erfindungsgemäße Freilaufmechanik derart in den Antriebsstrang eines Fahrzeugs eingeschalten sein, dass im Schiebebetrieb die Freilauffunktion den Antriebsmotor von dem Antriebsstrang zu einem oder mehreren Rädern entkoppelt. Dadurch kann während der Fahrt jederzeit in diesen Schiebebetrieb gewechselt werden, indem das Gas zurückgenommen wird, so dass der Motor langsamer dreht. Die Ausgangswelle bleibt davon unbeeinflusst und lässt das Fahrzeug weiter rollen, so dass keine Energie vergeudet wird.

Eine andere Anwendung findet eine erfindungsgemäße Freilaufmechanik, indem sie zwischen den Antriebsstrang eines Fahrzeugs und einem Schwungrad eingeschaltet ist. Je nachdem, in welcher Richtung die Freilaufmechanik dort eingebaut wird, ergeben sich unterschiedliche Effekte:

Ist die Eingangswelle mit dem Fahrwerk und die Ausgangswelle der Feilaufmechanik mit dem Schwungrad gekoppelt, so würde das ausrollende Fahzeug so lange das Schwungrad antreiben, bis das Fahrzeug zuviel Energie verloren hat und von dem schwungrad überholt wird; dabei sorgt der Freilauf dafür, dass das Schwungrad weiter in Rotation bleibt und nicht gebremst wird.

Ist dagegen die Eingangswelle der Feilaufmechanik an das Schwungrad gekoppelt und die Ausgangswelle an den Antriebsstrang, so kann die kinetische Energie von dem Schwungrad auf das Fahrzeug übertragen werden, um dieses anzutreiben; hat das Schwungrad seine Energie abgegeben, wirkt es dank der Freilauffunktion nicht mehr bremsend auf das Fahrzeug ein.

Schließlich entspricht es der Lehre der Erfindung, dass es zwischen einen Motor eines Fahrzeugs und einen Anlasser desselben eingeschaltet ist. Damit kann erreicht werden, dass der Anlasser bei stillstehendem Motor diesen beschleunigt bis auf eine Drehzahl, ab welcher die Zündung einsetzt und den Motor in Bewegung hält. Sobald der Motor dann selbst weiter beschleunigt, wird der Anlasser dank der Freilaufmechanik von dem Motor abgekoppelt, obzwar hierfür keine Kupplung zu betätigen ist.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1         ein Konstruktionsschema für ein in dem erfindungsgemäßen Getriebe beorzugt verwendetes Differential;

Fig. 2      ein Konstruktionsschema für eine erfindungsgemäße Freilaufmechanik nter Verwendung zweier miteinander gekoppelter Differentiale;

Fig. 3      eine gegenüber der Anordnung nach Fig. 2 leicht abgewandelte Ausführungsform der Erfindung;

Fig. 4      eine gegenüber den Anordnungen nach den Figuren 2 und 3 weiter abgewandelte Ausführungsform der Erfindung;

Fig. 5      eine weitere, stärker abgewandelte Ausführungsform der Erfindung mit einem dritten Differential, in einer Darstellung gemäß Fig. 2;

Fig. 6      eine gegenüber der Anordnung nach Fig. 5 geringfügig modifizierte Ausführungsform der Erfindung;

Fig. 7      eine wiederum andere Ausführungsform der Erfindung mit einem dritten und vierten Differential, in einer Darstellung gemäß Fig. 2;

Fig. 8      eine gegenüber der Fig. 7 nochmals abgewandelte Ausführungsform der Erfindung;

Fig. 9      eine von der Fig. 8 geringfügig abweichende Ausführungsform der Erfindung;

Fig. 10a eine      Mechanik, womit die Freilauffunktion vorübergehend blockierbar ist, teilweise abgebrochen;

Fig. 10b      einen Schnitt durch die Fig. 10a entlang der Linie XB - XB;

Fig. 10c      die Elektrik zur Steuerung der Mechanik nach Figuren 10a und 10b;

Fig. 11      eine andere Mechanik, womit sich die Freilauffunktion vorübergehend blockieren lässt, in einem Vertikalschnitt;

Fig. 12      ein Konstruktionsschema in Form einer Draufsicht auf einen Antriebsstrang eines Kraftfahrzeugs mit Vorderradantrieb als Beispiel für den Einsatz einer erfindungsgemäßen Freilaufmechanik in einem solchen Antriebsstrang;

Fig. 13      eine der Fig. 12 entsprechende Ansicht betreffend den Einsatz einer erfindungsgemäßen Freilaufmechanik im Rahmen des Antriebsstranges eines Kraftfahrzeugs mit Allradantrieb;

Fig. 14      eine der Fig. 13 entsprechende Darstellung einer demgegenüber vereinfachten Anordnung;

Fig. 15      ein Konstruktionsschema betreffend die Verwendung einer erfindungsgemäßen Freilaufmechanik im Rahmen eines vorzugsweise elektrisch betriebenen Kraftfahrzeugs mit einem innerhalb der vertikalen Mittellängsebene des Fahrzeugs angeordneten Schwungrad;

Fig. 16      eine der Fig. 15 entsprechende Darstellung einer demgegenüber abgewandelten Ausführungsform der Erfindung;

Fig. 17      ein Konstruktionsschema für die Verwendung einer erfindungsgemäßen Freilaufmechanik bei einem Kraftfahrzeug mit einem außermittig angeordneten Schwungrad, welches durch den Fahrtwind in Gang gehalten wird;

Fig. 18      ein unter der Motorhaube liegend eingebautes Schwungrad, welches durch den Fahrtwind in Gang gehalten wird, in der Draufsicht; sowie

Fig. 19      ein Konsturktionsschema zur Verdeutlichung der Ankopplung eines Anlassers an einen Antriebsstrang eines Kraftfahrzeugs über eine erfindungsgemäße Freilaufmechanik.

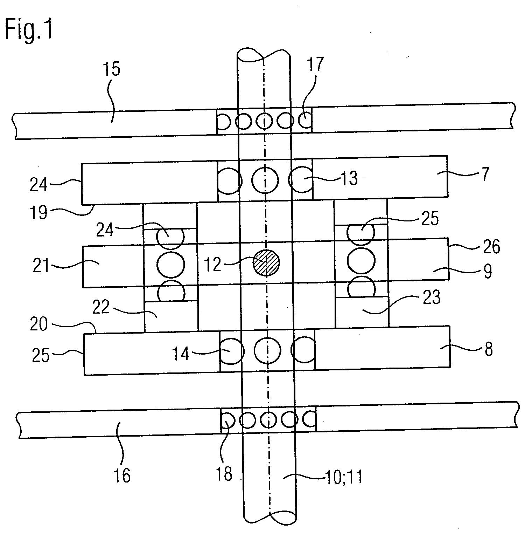

In Fig. 1 ist eines der von der Erfindung für den Einsatz in einem erfindungsgemäßen Getriebe 1 mit Freilauffunktion zwischen dessen Eingangswelle 2 und Ausgangswelle 3 bevorzugt verwendeten ersten und zweiten Differentiale 4, 5 dargestellt, welche in dem Getriebe 1 durch ein Gehäuse 6 umgeben und dadurch or der Umgebung geschützt sind.

Obwohl dies nicht zwingend erforderlich ist, können das erste und zweite Differential 4, 5 baugleich sein. Dadurch wird beispielsweise die Lagerhaltung und Ersatzteilbeschaffung vereinfacht, etc.

Wie man der Fig. 1 entnehmen kann, ist das Differential 4; 5 vorzugsweise nicht mit Kegelrädern aufgebaut, sondern mit Kronenrädern 7, 8. Diese sitzen zusammen mit einem dazwischen angeordneten Umlaufradträger 9 auf einer gemeinsamen Welle 10; 11. Allerdings sind diese nicht allesamt an der Welle 10; 11 befestigt; vielmehr weist nur ein Kronenrad 7, 8 oder der Umlaufradträger 9 auf der Welle 10; 11 eine Befestigung 12 auf, die beiden anderen Elemente sind dort nur drehbar gelagert, insbesondere mittels Wälzlagern 13, 14.

Die Welle 10; 11 selbst ist ihrerseits drehbar gelagert, insbesondere an dem Gehäuse 6 oder an einem oder mehreren, damit verbundenen Chassisteilen 15, 16. Dazu dienen bevorzugt ebenfalls Wälzlager 17, 18.

Die beiden Kronenräder 7, 8 sind parallel zueinander ausgerichtet und an ihren einander zugewandten Seiten 19, 20 mit einer internen Verzahnung versehen, die in der eher schematischen Fig. 1 nicht explizit wiedergegeben ist.

Zwischen den beiden Kronenrädern 7, 8 befindet sich der Umlaufradträger 9, welcher beispielsweise eine oder mehrere, radial zur Welle 10; 11 verlaufende Achsen 21, auf denen jeweils mindestens ein stirnverzahntes Umlaufrad 22, 23 drehbar gelagert ist, insbesondere mittels Wälzlagern 24, 25. Vorzugsweise sind dabei zwei oder mehr (Anzahl n) solche Umlaufräder 22, 23 vorgesehen, welche jeweils um radiale Achsen 21 verdrehbar sind, welche Zentrumswinkel $\alpha$ von $\alpha = 360° / n$ miteinander einschließen.

Vorzugsweise sind die beiden Kronenräder 7, 8 eines Differentials 4, 5 baugleich, d.h., sie haben gleiche Abmessungen und gleiche Zähnezahlen.

Andererseits sind auch sämtliche Umlaufräder 22, 23 eines Differentials 4, 5 untereinander baugleich, haben also auch jeweils gleichen Radius und gleiche Zähnezahl.

Während der Umlaufradträger 9 mit einer Drehzahl $\omega_{11}$, $\omega_{21}$ umläuft, dreht sich ein Kronenrad 7 mit einer Drehzahl $\omega_{12}$, $\omega_{22}$, und das andere Kronenrad 8 mit einer Drehzahl $\omega_{13}$, $\omega_{23}$, wobei diese Drehzahlen untereinander in bestimmter Relation stehen. So gilt für das erste Differential 4:

$$\omega_{11} = \tfrac{1}{2} * (\omega_{12} + \omega_{13}),$$

und für das zweite Differential 5:

$$\omega_{21} = \tfrac{1}{2} * (\omega_{22} + \omega_{23}),$$

mit anderen Worten, der Umlaufradträger 9 rotiert immer mit dem Mittelwert der Drehzahlen der beiden Kronenräder 7, 8.

Im synchronen Betrieb rotieren beide Kronenräder 7, 8 mit der selben Drehzahl und teilen dieselbe dem Umlaufradträger 9 mit. In diesem synchronen Betrieb des ersten Differentials 4 gilt:

$$\omega_{11} = \omega_{12} = \omega_{13};$$

bzw. falls sich das zweite Differential 5 im synchronen Betrieb befindet, gilt:

$$\omega_{21} = \omega_{22} = \omega_{23}.$$

In diesem Falle drehen sich die Umlaufräder 22, 23 nicht um ihre jeweiligen Achsen 21.

Es gibt noch einen anderen ausgezeichneten Betriebspunkt, nämlich den, dass der jeweilige Umlaufradträger 9 stillsteht. Wenn dies bei dem ersten Differential 4 zutrifft, gilt:

$$\omega_{11} = 0; \ \omega_{12} = -\omega_{13};$$

falls der Umlaufradträger 9 das zweiten Differentials 5 steht, gilt:

$$\omega_{21} = 0; \omega_{22} = -\omega_{23}.$$

Dazu müssen sich die Umlaufräder 22, 23 um ihre jeweiligen Achsen 21 drehen.

Die beiden Kronenräder 7, 8 stellen je einen mit der betreffenden Drehzahl $\omega_{12}$, $\omega_{13}$; $\omega_{22}$, $\omega_{23}$ umlaufenden Drehanschluss des betreffenden Differentials 4, 5 dar und können zur drehfesten Ankopplung an ein anderes Drehelement mit einer Verzahnung an ihrem Außenumfang 24, 25 versehen sein.

Je nach Bedarf können auch diese Kronenräder oder Drehanschlüsse 7, 8 je nach Bedarf an ihrem Umfang vergrößert oder in ihrer axialen Erstreckung verlängert sein oder drehfest mit weiteren Zahnrädern integriert oder verbunden sein und über dieselben ihren An- oder Abtrieb erfahren.

In ähnlicher Form kann bei Bedarf der Umlaufradträger 9 an seiner Peripherie von einer Art Felge umgeben sein, an deren Außenumfang 26 eine Verzahnung angeordnet sein kann, womit ein weiteres verzahntes Drehelement kämmen kann. Jedoch ist zumeist ein Kronenrad 7, 8 oder der Umlaufradträger 9 unmittelbar mit der betreffenden Welle 10; 11 verbunden 12 und bedarf daher keiner umlaufenden Verzahnung.

Die Wellen 10; 11 der beiden Differentiale 4, 5 sind vorzugsweise parallel zueinander, liegen aber nicht in einer gemeinsamen Flucht.

Während die das zweite Differential 5 tragende Welle 11 gleichzeitig als Ausgangswelle 3 dient, wird die das erste Differential 4 tragende Welle 10 nicht als Eingangswelle 2 verwendet; letztere ist vielmehr eigenständig.

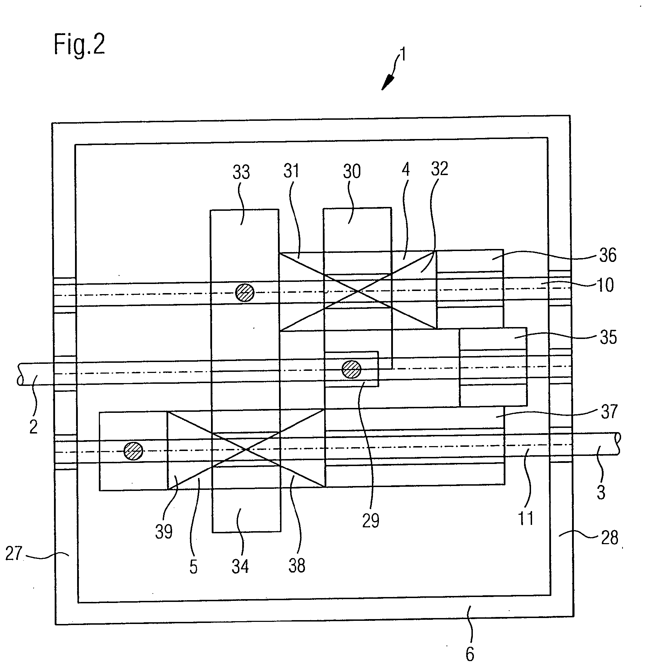

Bei der Ausführungsform eines erfindungsgemäßen Getriebes 2 nach Fig. 2 gibt es demnach insgesamt drei Wellen 2, 10, 11, welche allesamt parallel zueinander sind. Diese Wellen 2, 10, 11 können auf verschiedene Weise gelagert sein. Bei der Ausführungsform gemäß Fig. 2 sind sie jeweils im Bereich ihrer beiden Enden in einander gegenüber liegenden Wänden 27, 28 des Gehäuses 6 gelagert; dabei ist nur jeweils ein Ende der Eingangswelle 2 und der Ausgangswelle 3 herausgeführt.

Im Gehäuse 6 ist auf der Eingangswelle 2 ein Zahnrad als Eingangs-Zahnrad 29 drehfest verankert, welches mit einer rundum laufenden Verzahnung am Außenumfang 26 des Umlaufradträgers 30 des ersten Differentials 4 kämmt und die an der Eingangswelle 2 eingespeiste Antriebsleistung auf diesem Wege auf den Umlaufradträger 30 des ersten Differentials 4 einleitet. Der Umlaufradträger 30 des ersten Differentials rotiert infolgedessen mit einer Drehzahl $\omega_{11}$. Der Durchmesser des Umlaufradträgers 30 ist etwa k-mal so groß wie der Durchmesser des mit der Drehzahl $\omega_E$ der Eingangswelle 2 rotierenden Eingangs-Zahnrades 29, so dass gilt:

$$\omega_{11} = 1/k * \omega_E, \text{ bzw. } \omega_E = k * \omega_{11}.$$

Im vorliegenden Beispiel ist beispielsweise k = 3, und demnach ist in diesem Falle also $\omega_{11} = 1/3 * \omega_E$.

Von dort teilt sich die Eingangsleistung auf und gelangt zu den beiden Drehanschlüssen 31, 32 des ersten Differentials, welche nach Art der Kronenräder 7, 8 von Fig. 1 gestaltet sein können.

Von diesen ist ein Drehanschluss 31 - in Fig. 2 der linke - drehfest mit einem Zahnrad 33 verbunden, welches demzufolge mit der Drehzahl $\omega_{12}$ rotiert. Dieses Zahnrad 33 kämmt mit einem anderen - gleich großen - Zahnkranz an dem Umlaufradträger 34 des auf der Welle 11 sitzenden, zweiten Differentials 5, welches mit der Drehzahl $\omega_{12}$ rotiert. Da das Zahnrad 33 und die damit kämmende Verzahnung an dem Umlaufradträger 34 des zweiten Differentials 5 gleich groß sind und gleich viele Zähne tragen, rotieren sie mit der selben Drehzahl, nur entgegengesetzt:

$$\omega_{21} = -\omega_{12} \text{ bzw. } \omega_{12} + \omega_{21} = 0.$$

Auf der Eingangswelle 2, welche sich zwischen den beiden anderen Wellen 10, 11 befindet - von jenen beiden vorzugsweise gleich weit entfernt - ist ferner ein Koppelzahnrad 35 drehbar gelagert, welches mit zwei Zahnrädern 36, 37 kämmt, von denen das eine Zahnrad 36 mit dem verbleibenden, dritten Drehanschluss 32 des ersten Differentials 4 drehfest verbunden ist, der mit der Drehzahl $\omega_{13}$ rotiert, während das andere Zahnrad 37 mit einem vorzugsweise als Kronenrad 7, 8 ausgebildeten Drehanschluss 38 des zweiten Differentials 5 drehfest verbunden ist, der mit der Drehzahl $\omega_{23}$ rotiert. Da die beiden Zahnräder 36, 37 gleichen Durchmesser aufweisen und gleiche Zähnezahl, rotieren die beiden Drehanschlüsse 32, 38 mit der selben Drehzahl, es gilt:

$$\omega_{23} = \omega_{13} \text{ bzw. } \omega_{12} - \omega_{23} = 0.$$

Die mit der Drehzahl $\omega_A$ rotierende Ausgangswelle 3 ist mit dem verbleibenden Drehanschluss 39 des zweiten Differentials 5 drehfest verbunden, der mit der Drehzahl $\omega_{22}$ rotiert, so dass gilt:

$$\omega_A = \omega_{22} \text{ bzw. } \omega_A - \omega_{22} = 0.$$

Mit den beiden Gleichungen für die Differentiale 4, 5:

$$\omega_{11} = \tfrac{1}{2} * (\omega_{12} + \omega_{13}),$$

und

$$\omega_{21} = \tfrac{1}{2} * (\omega_{22} + \omega_{23})$$

lassen sich also die Drehzahlverhältnisse wie folgt darstellen:

$$1/k * \omega_E = \tfrac{1}{2} * (\omega_{12} + \omega_{13}),$$

oder:

$$\omega_E = k * \tfrac{1}{2} * (\omega_{12} + \omega_{13}),$$

einerseits, sowie

$$-\omega_{12} = \tfrac{1}{2} * (\omega_A + \omega_{13})$$

bzw.

$$\omega_A = - (2 * \omega_{12} + \omega_{13})$$

andererseits.
Man erkennt dabei folgendes:
Bei Stillstand an der Eingangswelle 2, also $\omega_E = 0$, gilt:

$$\omega_{12} + \omega_{13} = 0, \text{ bzw. } \omega_{12} = -\omega_{13},$$

allerdings besagt dies nicht, dass $\omega_{12}$ oder $\omega_{13} = 0$ sein muss. Setzt man $\omega_{12} = -\omega_{13}$ in die Gleichung für das zweite Getriebe 5 ein, so findet man:

$$\omega_A = - (2 * \omega_{12} - \omega_{12}) = \omega_{12}.$$

Da andererseits $\omega_{12}$ beliebig sein kann, darf die Ausgangswelle 3 sich drehen, $\omega_A \neq 0$, trotz Stillstand an der Eingangswelle 2, also $\omega_E = 0$. Dies ist gleichbedeutend mit einem Freilauf an der Ausgangswelle 3.
Wenn sich die Eingangswelle 2 mit der Geschwindigkeit $\omega_E \neq 0$ dreht, herrschen andere Verhältnisse:
Solange in keinem der beiden Leistungszweige ein Bremsmoment einwirkt, wird sich die Leistung in beiden Richtungen etwa zu gleichen Teilen verzweigen, so dass gilt:

$$\omega_{11} = \omega_{12} = \omega_{13} = 1/k * \omega_E,$$

woraus dann folgt:

$$\omega_{21} = -\omega_{12} = -1/k * \omega_E,$$

$$\omega_{23} = \omega_{13} = 1/k * \omega_E,$$

$$2 * \omega_{21} = \omega_A + \omega_{23} \text{ bzw. } \omega_A = 2 * \omega_{21} - \omega_{23} = -2/k * \omega_E - 1/k * \omega_E = -3/k * \omega_E.$$

Für k = 3 gilt also dann:

$$\omega_A = -\omega_E,$$

bzw.

$$\omega_A = ü * \omega_E \text{ mit } ü = -1.$$

Bei angetriebener Eingangswelle 2 rotiert also die Ausgangswelle 3 genauso schnell wie die Eingangswelle 2, nur in entgegengesetzter Richtung.

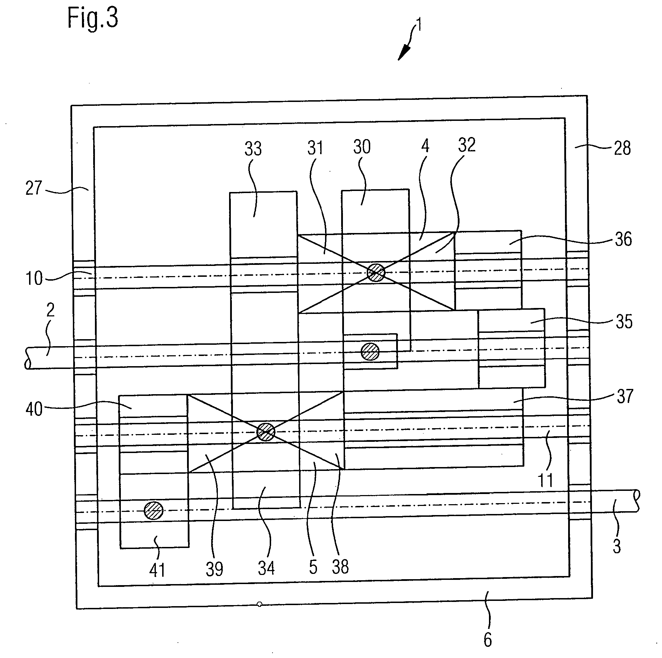

Bei der Ausführungsform nach Fig. 3 treibt der Drehanschluss 39 nicht unmittelbar die Ausgangswelle 3 an, sondern erst über ein Zahnradpaar 40, 41 mit gleich großen Zahnrädern, woraus sich eine Drehrichtungsumkehr ergibt. In diesem Falle gilt also

$$\omega_A = \omega_E,$$

bzw.

$$\omega_A = ü * \omega_E \text{ mit } ü = 1.$$

Bei dieser Ausführungsform dreht sich also die Ausgangswelle 3 bei einer Drehung an der Eingangswelle 2 mit der selben Geschwindigkeit mit, während bei einem Antrieb an der Ausgangswelle 3 die Eingangswelle 2 stehen bleibt.

Diese beiden Betriebszustände können sich allerdings additiv überlagern, d.h., bei einem Mit-Drehmoment am Ausgang kann gelten:

$$|\omega_A| \geq |ü * \omega_E|,$$

d.h., die Drehgeschwindigkeit $\omega_A$ an der Ausgangswelle 3 kann betragsmäßig größer sein als die durch die Übersetzung ü vorgegebene Drehzahl $|ü * \omega_E|$.

Mit anderen Worten, bei drehender Ausgangswelle 3 muss die Eingangswelle 2 nicht stillstehen, sondern kann sich bis zu der durch die Übersetzung vorgegebenen Drehzahl in der entsprechenden Drehrichtung drehen.

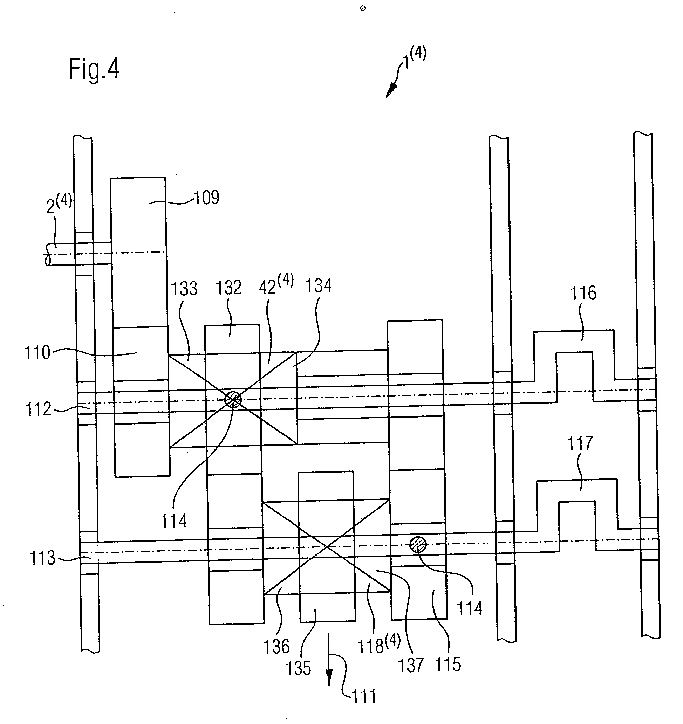

Im Gegensatz zu der Getriebe-Ausführungsform 1 nach Fig. 3 hat das Getriebe $1^{(4)}$ nach Fig. 4 eine etwas andere Funktionsweise.

Das Getriebe $1^{(4)}$ verfügt über zwei Differentiale $42^{(4)}$ und $118^{(4)}$.

Das eine Differential $42^{(4)}$ verfügt über einen Umlaufradträger 132 und zwei weitere Drehanschlüsse 133, 134; das andere Differential $118^{(4)}$ über einen Umlaufradträger 135 und zwei weitere Drehanschlüsse 136, 137.

Für jedes dieser beiden Differentiale $42^{(4)}$ und $118^{(4)}$ gilt die Differentialbedingung. Für das Differential $42^{(4)}$ gilt (die Indizes beziehen sich in diesem Fall auf die Bezugszeichen der Drehanschlüsse):

$$\omega_{132} = \tfrac{1}{2} * (\omega_{133} + \omega_{134}).$$

Für das Differential 118$^{(4)}$ gilt (auch hier beziehen sich die Indizes auf die Bezugzeichen der Drehanschlüsse):

$$\omega_{135} = \tfrac{1}{2} * (\omega_{136} + \omega_{137}).$$

Auch bei dem Getriebe 1$^{(4)}$ ist eine strukturelle Asymmetrie vorhanden, indem vom Differential 42$^{(4)}$ sowohl der Umlaufradträger 132 als auch ein weiterer Drehanschluss 134 mit dem anderen Differential 118$^{(4)}$ gekoppelt ist, während der verbleibende Drehanschluss 133 über die Zahnräder 109 und 110 die Antriebsenergie von der Antriebswelle 2$^{(4)}$ aufnimmt.

Das andere Differential 118$^{(4)}$ ist dagegen symmetrisch beschalten, d.h., dass seine beiden Drehanschlüsse 136, 137, deren interne Zahnkränze mit wenigstens einem im Umlaufradträger 135 gelagerten Umlaufrad kämmen, mit dem antriebsseitigen Differential 42$^{(4)}$ gekoppelt sind, und zwar in beiden Koppelzweige invertierend. Der Umlaufradträger 135 dieses abtriebsseitigen Differentials 118$^{(4)}$ ist über eine Verzahnung an seinem Außenumfang und ein nicht dargestelltes, damit kämmendes Zahnrad mit der ebenfalls nicht wiedergegebenen Ausgangswelle drehfest gekoppelt, was durch den Pfeil 111 angedeutet werden soll.

Dieses Getriebe 1$^{(4)}$ hat bereits in seinem Normalbetrieb, also ohne Beschaltung der Wellen 112, 113, zwei verschiedene Betriebszustände.

Der erste Betriebszustand ist dadurch definiert, dass beide Differentiale 42$^{(4)}$, 118$^{(4)}$ jeweils ohne interne Relativdrehzahlen synchron umlaufen, wobei also glt:

$$\omega_{132} = \omega_{133} = \omega_{134},$$

sowie:

$$\omega_{135} = \omega_{136} = \omega_{137}.$$

Dann ist die Ausgangsdrehzahl

$$\omega_A = \omega_{135} = -\omega_{133} = \omega_{109} = \omega_E$$

gleich der Drehzahl des Zahnrades 109 an der Eingangswelle 2$^{(4)}$.

Dieser synchrone Betriebszustand bleibt so lange erhalten, wie das Getriebe nicht durch eine Blockade der Ausgangswelle gezwungen wird, durch Übergang in den zweiten Betriebszustand die Ausgangsdrehzahl $\omega_A$ von der Eingangsdrehzahl $\omega_E$ abzukoppeln.

Im Fall einer Bremsung der Ausgangsdrehzahl $\omega_A$, bspw. durch Betätigen der Bremse eines mit dem Getriebe 1$^{(4)}$ ausgestatteten Kraftfahrzeugs:

$$\omega_A = 0$$

liefert das abtriebsseitige Differential 118$^{(4)}$ die folgende Bedingung:

$$\omega_{136} + \omega_{137} = 0,$$

also:

$$\omega_{136} = -\omega_{137}.$$

Dies wiederum bedeutet für das antriebseitige Differential 42$^{(4)}$ aufgrund der doppelten, gegenseitigen Kopplung, jeweils mit dem Kopplungsfaktor 1:

$$\omega_{132} + \omega_{134} = 0,$$

also:

$$\omega_{132} = -\omega_{134}.$$

Ferner gilt aufgrund der Differentialgleichung am antriebsseitigen Differential $42^{(4)}$:

$$\omega_{132} = \tfrac{1}{2} * (\omega_{133} + \omega_{134}) = -\omega_{134},$$

mit anderen Worten:

$$\omega_{133} + \omega_{134} = -2\omega_{134},$$

$$\omega_{133} = -3\omega_{134}.$$

Dann ist - trotz stillstehender Ausgangswelle mit $\omega_A = 0$ - eine Drehung der Eingangswelle mit $\omega_E \neq 0$ möglich. Es gilt dann:

$$\omega_E = -\omega_{133} = 3\omega_{134},$$

und:

$$\omega_{132} = \tfrac{1}{2} * (-3\omega_{134} + \omega_{134}) = -\omega_{134},$$

wobei dann gemäß obigen Ausführungen die Ausgangswelle stillsteht.

Somit kann das Getriebe $1^{(4)}$ die Aufgabe eines Drehmomentwandlers erfüllen, wie er bei Automatikgetrieben eingesetzt wird, um beim Abbremsen des Fahrzeugs den Antriebsmotor von den angetriebenen Rädern abzukoppeln.

Bei diesem Getriebe $1^{(4)}$ ist als weitere Möglichkeit angedeutet, dass die Freilauffunktion generell ausgeschalten werden kann. Zu diesem Zweck sind die beiden Wellen 112, 113, auf denen jeweils ein Differential $42^{(4)}$, $118^{(4)}$ sitzt, mit jeweils einem Drehteil eines der beiden Koppelzweige zwichen den beiden Differentialen $42^{(4)}$, $118^{(4)}$ drehfest gekoppelt. Das jeweils drehfest auf einer Welle 112, 113 fixierte Drehteil ist durch einen schraffierten Kreis 114 markiert. Man erkennt daraus, dass mit der eingangsseitigen Welle 112 das Umlaufrad 132 des antriebsseitigen Differentials $52^{(4)}$ gekoppelt ist, mit der ausgangsseitigen Welle 113 ein mit einem Drehanschluss 137 drehfest gekoppeltes Zahnrad 115.

Somit kann durch Stillsetzen der Welle 112 der Leistungsfluss über den einen Koppelzweig blockiert werden, durch Stillsetzen der Welle 113 der Leistungsfluss über den anderen Koppelzweig. Um dies bewirken zu können, ist nicht etwa eine Bremse vorgesehen. Vielmehr weist jede der beiden Wellen 112, 113 einen doppelt abgekröpften Bereich 116, 117 mit einem gegenüber dem Hauptabschnitt der jeweiligen Getriebewelle 112, 113 exzentrischen Verlauf auf. Dieser doppelt abgekröpfte, exzentrische Bereich 116, 117 kann nur dann um die Achse der jeweiligen Welle 112, 113 rotieren, wenn ein diesen aufnehmendes Lager um eben diese Achse rotieren kann. Wird ein solches Lager dagegen aus der dazu notwendigen Flucht mit der betreffenden Welle 112, 113 weggeschwenkt, ist das Gestänge 116, 117 nicht mehr drehfähig und blockiert den jeweiligen Koppelzweig.

Über die beiden Wellen 112, 113 kann man so gezielt auf den Freilauf in jeweils einer Drehrichtung Einfluss nehmen. Wird durch Verstellen des abgekröpften Bereichs 116 an der Welle 112 das Umlaufrad 132 blockiert, so rotiert der Drehanschluss 134 mit der Eingangsdrehzahl $\omega_E$ an der Welle $2^{(4)}$, das Zahnrad 115 rotiert entgegengesetzt und der Drehanschluss 136 steht still. Somit rotiert der Umlaufradträger 135 mit der halben, gegenläufigen Drehzahl wie die Eingangswelle:

$$\omega_A = -\tfrac{1}{2}\,\omega_E.$$

Wird dagegen durch Verstellen des abgekröpften Bereichs 117 an der Welle 113 der Drehanschluss 132 blockiert, so steht auch der Drehanschluss 134 still. Somit rotiert der Umlaufradträger 132 mit der halben, gegenläufigen Eingangsdrehzahl $\omega_E$ an der Welle $2^{(4)}$, und der Drehanschluss 136 rotiert demzufolge mit der halben Eingangsdrehzahl $\omega_E$, und zwar im selben Umlaufsinn wie die Eingangswelle $2^{(4)}$. Aufgrund des stillstehenden Drehanschlusses 137 rotiert der Umlaufradträger 135 mit einem Viertel der Drehzahl an der Eingangswelle:

$$\omega_A = \tfrac{1}{4}\,\omega_E.$$

Bedingt durch seine Funktion kann das Getriebe $1^{(4)}$ bspw. in einem Kraftfahrzeug als mechanischer Drehmomentwandler eingesetzt werden, mit Vor- und Rückwärtsgang und Kupplungsfunktion.

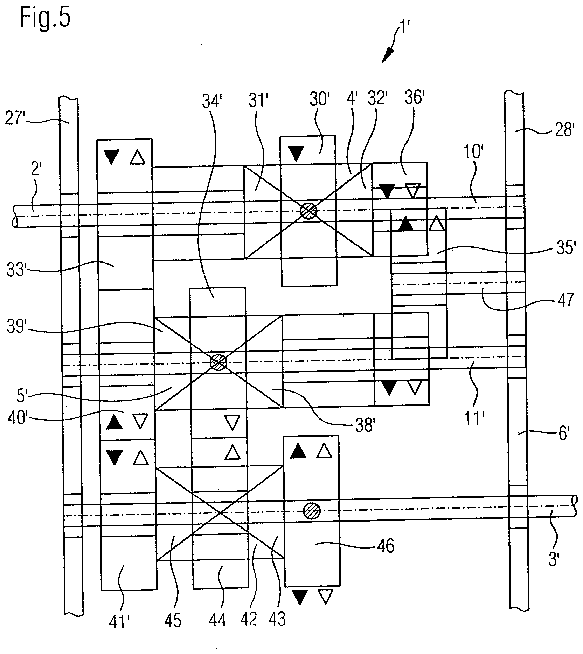

In Fig. 5 ist eine weiter abgewandelte Ausführungsform eines erfindungsgemäßen Getriebes 1' wiedergegeben. Man erkennt, dass es hier nicht nur ein erstes Differential 4' und ein zweites Differential 5' gibt, sondern auch noch ein drittes Differential 42.

Auch die Beschaltung dieser drei Differentiale 4', 5', 42 weicht geringfügig von der zuvor beschriebenen Beschaltung ab:

Zum einen ist die Ankopplung zwischen der Eingangswelle 2' und dem Differential 4' insofern anders, als bei dem Getriebe 1' der Umlaufradträger 30' drehfest mit der Welle 10' verbunden ist, die gleichzeitig als Eingangswelle 2' fungiert. Demnach ist in diesem Falle der Koppelfaktor k = 1, d.h.: $\omega_{11} = \omega_E$.

Andererseits wirkt bei dieser Ausführungsform das Zahnrad 33' nicht auf den Umlaufradträger 34 des zweiten Differentials 5' ein, sondern auf einen anderen Dehanschluss 39 desselben, nämlich über ein damit drehfest verbundenes Zahnrad 40'. Da dieses Zahnrad 40' den selben Durchmesser und die selbe Zähnezahl aufweist wie das Zahnrad 33', gilt für die Drehzahl $\omega_{22}$ des Drehanschlusses 39:

$$\omega_{22} = -\omega_{12}.$$

Da der zweite Leistungszweig genauso beschalten ist wie bei dem Getriebe 1, gilt wie dort:

$$\omega_{23} = \omega_{13}.$$

Insgesamt ist also bei dieser Anordnung sowohl das erste Differential 4' symmetrisch beschalten, als auch das zweite Differential 5', nämlich insofern, als beim ersten Differential 4' der Umlaufradträger 30' drehfest mit der Eingangswelle 2' verbunden ist, dort findet also eine Leistungsverzweigung auf die beiden übrigen Drehanschlüsse 31', 32' statt, während bei dem zweiten Differential 5' die Leistungszweige sich im dortigen Umlaufradträger 34' wieder vereinigen. Deshalb ist bei dieser Anordnung die Kopplung zwischen dem zweiten und dritten Differential 5', 42 asymmetrisch.

Das dritte Differential 42 ist bei dem Getriebe 1' nach Fig. 5 unmittelbar an das zweite Differential 5' angekoppelt, und zwar derart, dass die beiden Umlaufradträger 34, 44 über daran angeordnete Verzahnungen unmittelbar ineinander kämmen, wobei Durchmesser und Zähnezahl der beiden miteinander kämmenden Umlaufradträger 34, 44 gleich sind, so dass gilt:

$$\omega_{31} = -\omega_{21}.$$

Ferner sind zwei weitere Drehanschlüsse 39, 45 beider Differentiale 5', 42 miteinander gekoppelt, und zwar über gleich große, miteinander kämmende Zahnräder 40', 41', so dass gilt:

$$\omega_{32} = -\omega_{22}.$$

Die das dritte Differential 42 tragende Welle dient als Ausgangswelle 3', und diese ist mit dem dritten Drehanschluss 43 des dritten Differentials 42 oder ein Damit verbundenes Zahnrad 46 drehfest gekoppelt, so dass gilt:

$$\omega_A = \omega_{33}.$$

Aufgrund der Differential-Übertragungsfunktion gilt demnach:

$$\omega_A = \omega_{33} = 2 * \omega_{31} - \omega_{32} = \omega_{22} - 2 * \omega_{21} = -\omega_{12} - 2 * \omega_{21};$$

Mit $\omega_{21} = \frac{1}{2} * (\omega_{22} + \omega_{23})$ folgt dann:

$$\omega_A = -\omega_{12} - 2 * \omega_{21} = -\omega_{12} - \omega_{22} - \omega_{23} = -\omega_{12} + \omega_{12} - \omega_{13} = -\omega_{13}.$$

Es gibt nun zwei unterschiedliche Betriebsfälle, nämlich den synchronen Betrieb des ersten Differentials 4', und dessen asynchronen Betrieb:

|  | $\omega_E$ | $\omega_{11}$ | $\omega_{12}$ | $\omega_{13}$ | $\omega_{21}$ | $\omega_{22}$ | $\omega_{23}$ | $\omega_{31}$ | $\omega_{32}$ | $\omega_{33}$ | $\omega_A$ |
|---|---|---|---|---|---|---|---|---|---|---|---|
| Antrieb am Eingang | $\omega_E$ | $\omega_E$ | $\omega_E$ | $\omega_E$ | 0 | $-\omega_E$ | $\omega_E$ | 0 | $\omega_E$ | $-\omega_E$ | $-\omega_E$ |
| Antrieb am Ausgang | 0 | 0 | $\omega_A$ | $-\omega_A$ | $-\omega_A$ | $-\omega_A$ | $-\omega_A$ | $\omega_A$ | $\omega_A$ | $\omega_A$ | $\omega_A$ |

Wie man aus dieser Tabelle sehen kann, führt ein Antrieb an der Eingangswelle 2' zu einer entgegengesetzt gleichen Drehzahl an der Ausgangswelle: $\omega_A = -\omega_E$, d.h., $\ddot{u} = \omega_A / \omega_E = -1$, während bei einem Antrieb an der Ausgangswelle 3' die Eingangswelle 2' stehen bleibt: $\omega_E = 0$.

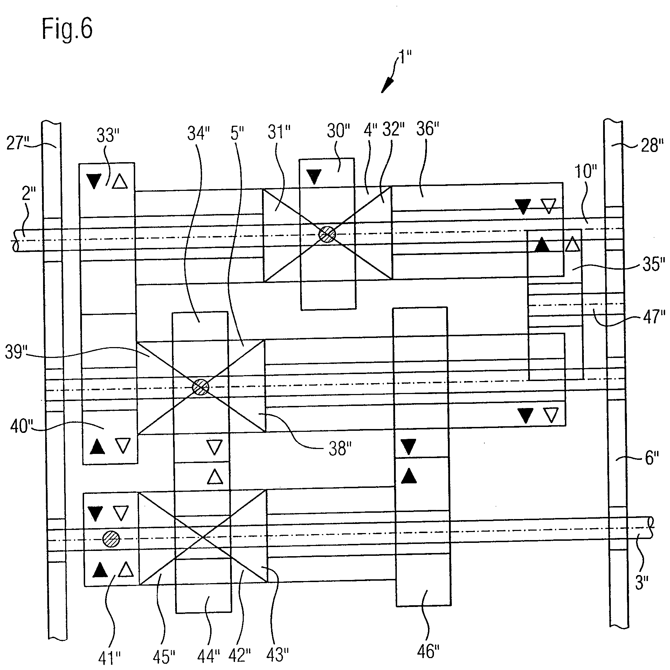

Ähnlich verhält sich das Getriebe 1" nach Fig. 6, welches sich von dem in Fig. 5 dargestellten nur dadurch unterscheidet, dass das dritte Differential 42" sozusagen "spiegelverkehrt" angekoppelt ist, nämlich derart, dass neben dem Umlaufradträger 44" noch ein Drehanschluss 46" an den nicht invertierenden Zweig zwischen erstem und zweitem Differential 4", 5" angekoppelt ist, während bei dem Getriebe 1' nach Fig. 4 stattdessen ein Drehanschluss 45 an den invertierenden Zweig zwischen dem ersten und zweiten Differential 4', 5' angekoppelt war. Die Ausgnagswelle 3" ist dann mit dem noch freien Drehanschluss 45" des dritten Differentials 42" drehfest verbunden, so dass gilt:

$$\omega_{31} = -\omega_{21}; \; \omega_{32} = \omega_A; \; \omega_{33} = -\omega_{23}.$$

Analog zu Fig. 5 zeigt sich folgendes Verhalten beim Antrieb von der Eingangswelle 2" und von der Ausgangswelle 3" her:

|  | $\omega_E$ | $\omega_{11}$ | $\omega_{12}$ | $\omega_{13}$ | $\Omega_{21}$ | $\omega_{22}$ | $\omega_{23}$ | $\omega_{31}$ | $\omega_{32}$ | $\omega_{33}$ | $\omega_A$ |
|---|---|---|---|---|---|---|---|---|---|---|---|
| Antrieb am Eingang | $\omega_E$ | $\omega_E$ | $\omega_E$ | $\omega_E$ | 0 | $-\omega_E$ | $\omega_E$ | 0 | $\omega_E$ | $-\omega_E$ | $\omega_E$ |
| Antrieb am Ausgang | 0 | 0 | $\omega_A$ | $-\omega_A$ | $-\omega_A$ | $-\omega_A$ | $-\omega_A$ | $\omega_A$ | $\omega_A$ | $\omega_A$ | $\omega_A$ |
| add. Überlagerung | $\omega_E$ | $\omega_E$ | $\omega_E + \omega_a$ | $\omega_E - \omega_a$ | $-\omega_a$ | $-\omega_E - \omega_a$ | $\omega_E - \omega_a$ | $\omega_a$ | $\omega_E + \omega_a$ | $-\omega_E + \omega_a$ | $\omega_E + \omega_a$ |

Also verhält sich das Getriebe 1" fast genauso wie das Getriebe 1', mit dem einzigen Unterschied, dass beim Antrieb an der Eingangswelle 2" die Ausgangswelle 3" mit der selben Drehrichtung und Geschwindigkeit umläuft wie die Eingangswelle 2": $\omega_A = \omega_E$. Mit anderen Worten, $\ddot{u} = \omega_A / \omega_E = 1$.

Wie die vierte Spalte der letzten Tabelle zeigt, können sich die beiden Betriebsfälle überlagern, allerdings nur additiv, nicht subtraktiv. Dabei wurde in der letzten Zeile für den Antrieb an der Ausgangswelle 3" die daraus resultierende Differenz-Drehzahl $\omega_a$ gewählt, so dass für die gesamte Drehzahl an der Ausgangswelle 3" gilt:

$$\omega_A = \omega_E + \omega_a.$$

Mit anderen Worten, die Drehzahl $\omega_A$ an der Ausgangswelle 3" kann betragsmäßig um einen beliebigen Betrag $\omega_a$ größer sein als die Drehzahl $\omega_E$ der Eingangswelle 2" (Freilaufeffekt), aber nicht kleiner als jene (Antriebseffekt), solange $\omega_E$ und $\omega_a$ dabei die selbe Drehrichtung haben (nur additive Überlagerung).

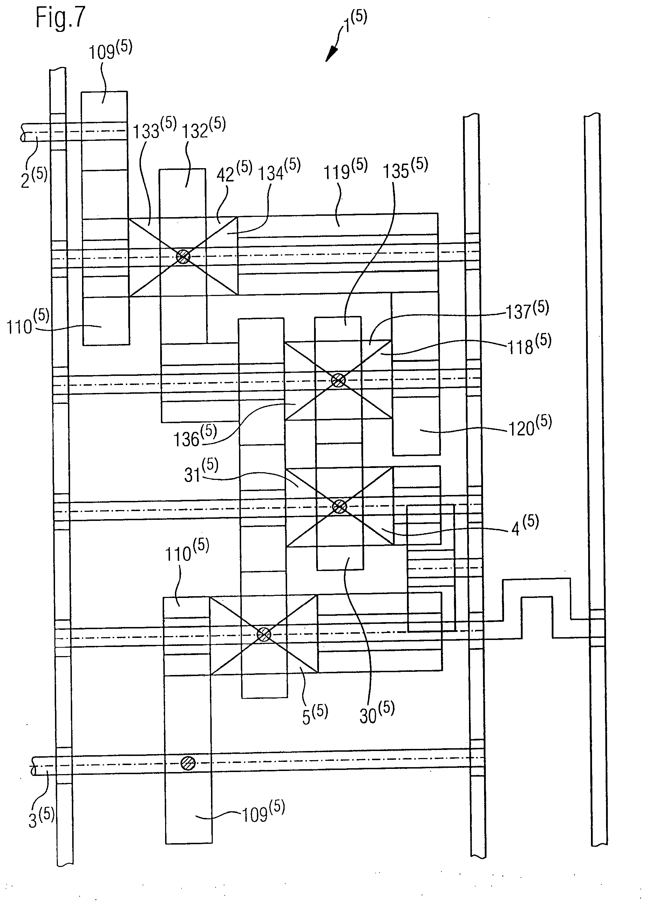

Das Getriebe 1[(5)] nach Fig. 7 weist insgesamt vier Differentiale 4[(5)], 5[(5)], 42[(5)], 118[(5)] auf. Die an die Ausgangs-

welle $3^{(5)}$ gekoppelte Ausgangsstufe mit den Differentialen $4^{(5)}$ und $5^{(5)}$ ist weitgehend baugleich mit dem Getriebe 1 aus Fig. 3. Dieser Ausgangsstufe vorgeschalten sind die beiden übrigen Differentiale $42^{(5)}$, $118^{(5)}$. Letztere sind untereinander auch jeweils doppelt gekoppelt, allerdings jeweils nur mit Drehrichtungsumkehr, wie die Getriebeanordnung $1^{(4)}$ in Fig. 4. Dadurch ergibt sich in diesem Bereich auch die Funktionalität des Getriebes $1^{(4)}$, allerdings mit der Maßgabe, dass hier nicht der Umlaufradträger $135^{(5)}$ allein als Abtrieb des Differentials $118^{(5)}$ dient, sondern die Differenzdrehzahl zu dem Drehanschluss $136^{(5)}$. Ferner sind die Kopplungen in den beiden Koppelzweigen zwischen den Differentialen $42^{(5)}$, $118^{(5)}$ zwar beide gegenläufig, jedoch mit unterschiedlichen Übersetzungsverhältnissen $\ddot{u}_{k1}$, $\ddot{u}_{k2}$, wobei vorzugsweise gilt:

$$\ddot{u}_{k1} = 1/\ddot{u}_{k2}.$$

Bedingt durch die daraus folgenden, unterschiedlichen Zahnpaarungen bei dem Eingangsdifferential wird der Leistungsfluss am antriebsseitigen Differential $42^{(5)}$ nicht über den mit geringerem Drehmoment übersetzten Zweig am Umlaufradträger $132^{(5)}$ gelenkt, sondern über den Drehanschluss $134^{(5)}$ und die Zahnräder $119^{(5)}$, $120^{(5)}$ zu dem Drehanschluss $137^{(5)}$ an dem Differential $42^{(5)}$. Dadurch wird im Normalbetrieb der Umlaufradträger $30^{(5)}$ des Differentials $4^{(5)}$ stärker angetrieben als dessen Drehanschluss $31^{(5)}$. Somit dreht dessen Drehanschluss $32^{(5)}$ schneller als der Drehanschluss $31^{(5)}$, und die Energie wird überwiegend über den nicht invertierenden Koppelzweig auf das Ausgangsdifferential $5^{(5)}$ übertragen.

Aufgrund seiner Funktiosweise kann das Getriebe $1^{(5)}$ als Freilaufgetriebe eingesetzt werden, mit der Besonderheit, dass im Freilauf eine stetige Beschleunigung der Ausgangswelle durch eine durchziehende Last möglich ist. Denn eine durchziehende Last an der Ausgangswelle $3^{(5)}$ kann die Drehzahlen innerhalb des Getriebes $1^{(5)}$ hochbeschleunigen, ohne dass dadurch die Drehzahl an der Eingangswelle $2^{(5)}$ ansteigt; vielmehr wird die Energie an dem Eingangsdifferential $42^{(5)}$ umgelenkt und wieder in den Vorwärtszweig mit den Zahnrädern $119^{(5)}$, $120^{(5)}$ eingespeist. Weil dabei sämtliche Zahnräder des Getriebes $1^{(5)}$ in Eingriff bleiben, kann bei Wegfall der durchziehenden Last ein Antriebsmoment an der Eingangswelle $2^{(5)}$ sogleich an die Ausgangswelle $3^{(5)}$ weitergeleitet werden, um jene weiter anzutreiben.

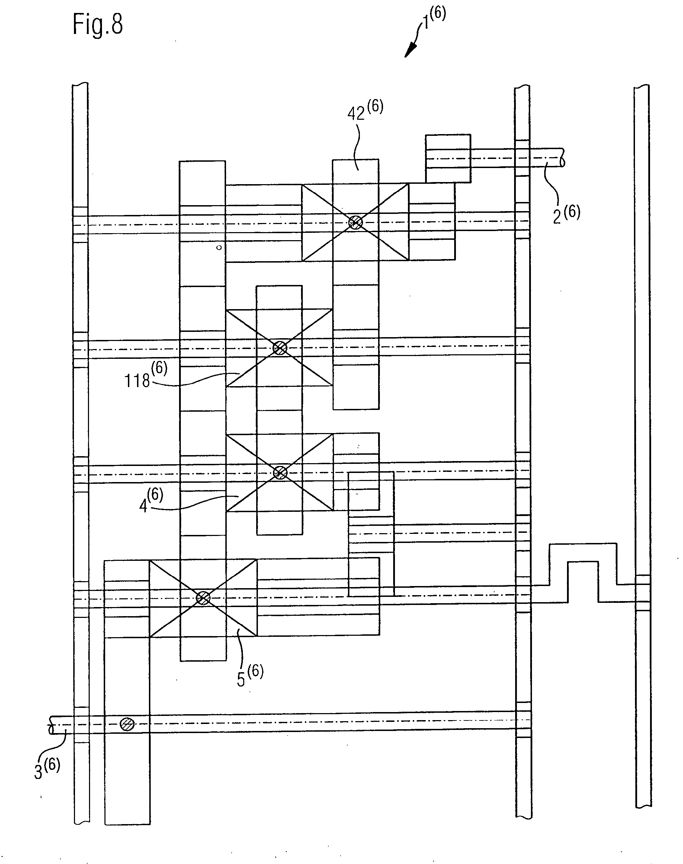

Das Getriebe $1^{(6)}$ aus Fig. 8 weist eine hohe Ähnlichkeit mit dem Getriebe $1^{(5)}$ aus Fig. 7 auf. Die Ausgangsstufe mit den Differentialen $4^{(6)}$ und $5^{(6)}$ ist identisch, und auch das diesen unmittelbar vorgeschaltete Differential $118^{(6)}$ ist identisch zu dem Getriebe $1^{(5)}$. Lediglich das Differential $42^{(6)}$ ist genau seitenverkehrt angekoppelt wie bei dem Getriebe $1^{(5)}$ aus Fig. 7. Außerdem sind die Koppelzahnräder zwischen den beiden eingangsseitigen Differentialen $42^{(6)}$, $118^{(6)}$ jeweils gleich groß. Diese beiden Modifikationen kompensieren sich in gewisser Weise gegenseitig und haben zur Folge, dass sich das Getriebe $1^{(6)}$ im Endeffekt genauso verhält wie das Getriebe $1^{(5)}$ nach Fig. 7: Im Normalbetrieb fließt die Antriebsenergie über den die Drehrichtung nicht invertierenden Koppelzweig zwischen den beiden Ausgangs-Differentialen $4^{(6)}$ und $5^{(6)}$. Umgekehrt kann aber eine durchziehende Last auch die internen Zahnräder des Getriebes $1^{(6)}$ beschleunigen, wobei die Energie an der Eingangswelle $2^{(6)}$ vorbei fließt und schließlich ebenfalls in den nicht invertierenden Koppelzweig zwischen den beiden Ausgangs-Differentialen $4^{(6)}$ und $5^{(6)}$. eingespeist wird. Nach Wegfall der durchziehenden Last kann ein Antriebsmoment von der Antriebswelle $2^{(6)}$ ohne Drehzahlabfall sogleich wieder eingespeist werden.

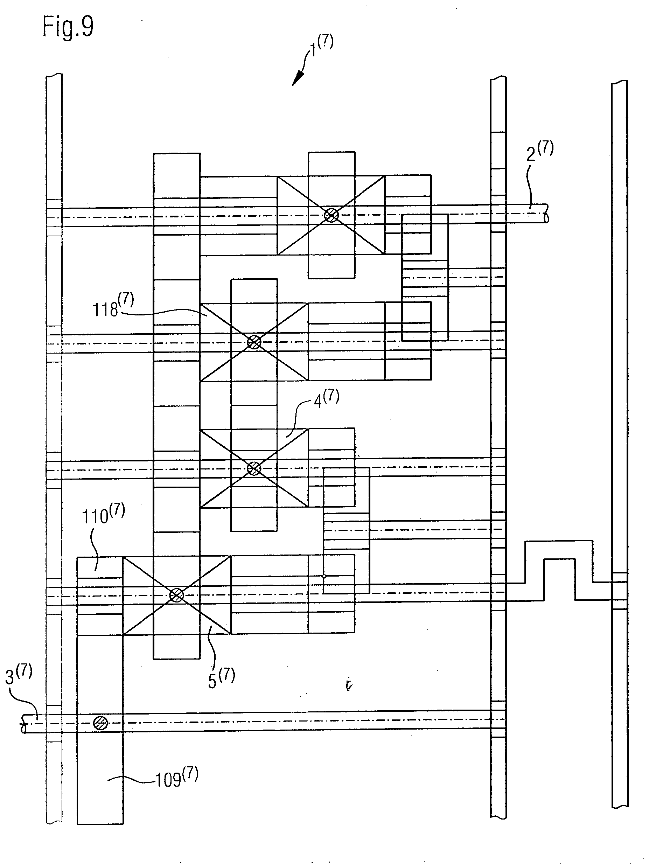

Das Getriebe $1^{(7)}$ aus Fig. 9 unterscheidet sich von dem Getriebe $1^{(6)}$ aus Fig. 8 vor allem dadurch, dass auch zwischen den beiden eingangsseitigen Differentialen $42^{(7)}$, $118^{(7)}$ - wie zwischen den beiden ausgangsseitigen Differentiale $4^{(7)}$, $5^{(7)}$ auch - jeweils ein Koppelzweig mit invertierender Drehzahl vorgesehen ist, und jeweils ein Koppelzweig mit einer nicht invertierenden Drehzahl. Damit ergibt sich - abgesehen von einem entgegengesetzten Übersetzungsverhältnis, bedingt durch die beiden unterschiedlich großen Abtriebszahnräder $109^{(7)}$, $110^{(7)}$ - ein exakt gleiches Übertragungsverhalten von der Eingangswelle $2^{(7)}$ zur Ausgangswelle $3^{(7)}$ wie auch umgekehrt von der Ausgangswelle $3^{(7)}$ zur Eingangswelle $2^{(7)}$, wodurch sich die Wirkungsweise noch verbessert.

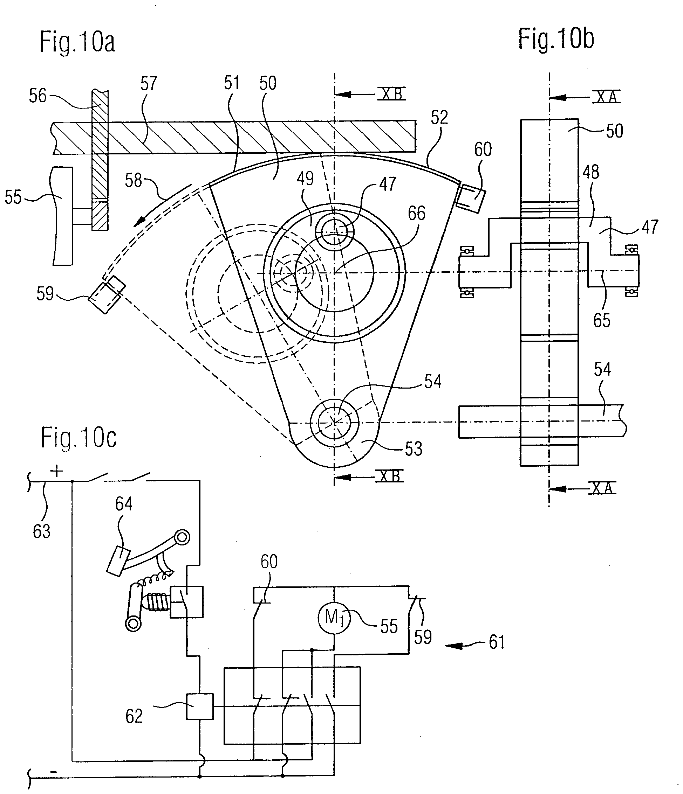

In den Figuren 10a, 10b und 10c ist eine Weiterbildung der Erfindung dargestellt, welche dazu verwendet werden kann, um den Freilaufeffekt in einem erfindungsgemäßen Getriebe 1, 1', 1", $1^{(4)}$, $1^{(5)}$, $1^{(6)}$, $1^{(7)}$ zu unterdrücken bzw. auszuschalten. Dazu wird bevorzugt auf ein Zahnrad 35, 35' 35" oder ein anderes Drehteil in einem Koppelzweig Einfluss genommen.

Dazu wird ein Koppelzahnrad 35, 35' 35" oder ein sonstiges Drehteil eines Koppelzweiges eines erfindungsgemäßen Getriebes 1, 1', 1", $1^{(4)}$, $1^{(5)}$, $1^{(6)}$, $1^{(7)}$ auf einer eigenen Welle 47, 47', 47" unverdrehbar festgelegt, auf welcher vorzugsweise kein anderes Zahnrad gelagert oder befestigt ist.

Wie man aus Fig. 10b erkennen kann, ist die Welle 47 mehrfach abgekröpft, ähnlich einer Kurbelwelle für einen Zylinder. Der exzentrische Abschnitt 48 dieser Welle 47 ist durch eine kreisförmige Scheibe 49 hindurchgeführt, die ihrerseits in einer Art verschwenkbarer Ringlünette 50 drehbar gelagert ist.

Die verschwenkbare Ringlünette 50 kann beispielsweise eine flache Gestalt aufweisen, etwa mit einer dreieckigen Grundfläche. Dabei kann jedoch eine Seite 51 dieses Dreiecks bogenförmig gestaltet sein und mit einer Zahnreihe 52 versehen sein. Im Bereich der der bogenförmigen Seite 51 gegenüber liegenden Spitze 53 der Ringlünette 50 ist diese um eine zu ihrer Ebene lotrechte Achse 54 schwenkbar gelagert. Sie kann mittels einer von einem Motor 55 vorzugsweise über ein Getriebe 56 angetriebene Schnecke 57, welche sich entlang der bogenförmigen Seite 51 der Ringlünette 50 erstreckt und mit der dortigen Zahnreihe 52 kämmt, um die Achse 54 verschwenkt werden.

Die zuzlässige Schwenkbewegung 58 der Ringlünette 50 ist durch zwei Endschalter oder -taster 59, 60 oder kontaktlose Sensoren, bspw. Näherungsschalter, begrenzt. Bei Kontakt öffnen diese Endschalter oder - taster 59, 60 oder Sensoren und öffnen daher den Stromkreis für den Motor 55 in der betreffenden Drehrichtung. Ein Motor-Schaltschütz 61 verbindet bei stromfreier Schaltspule 62 die beiden Kontakte des Motors 55 in derartiger Weise mit dem Plus- und Minuspol einer Spannungsquelle 63, dass sich die Ringlünette 50 in die in Fig. 10a dargestellte Position bewegt, wo sie an den Endschalter 60 stößt oder sich im Bereich eines kontaktlosen Sensors befindet, infolgedessen der betreffende Endschalter 60 oder Sensor den betreffenden Motorstromkreis unterbricht und den Motor 55 dadurch stillsetzt.

Wird durch Betätigen eines Pedals 64 oder sonstigen Schaltmittels die Schaltspule 62 des Motor-Schaltschütz 61 an die Spannungsquelle 63 angeschlossen, so bewegt sich der Anker innerhalb des Motor-Schaltschütz 61 und schließt einen anderen Stromkreis über den Motor 55, wodurch dieser nun mit einer umgekehrten Spannung versorgt wird und in die entgegengesetzte Drehrichtung läuft, mithin die Ringlünette 50 in die andere Richtung verschwenkt, bis diese an den Endschalter 59 stößt, der den Motorstromkreis unterbricht und nun die Ringlünette 50 in der anderen Endlage stillsetzt.

Wird also das Pedal 64 nicht betätigt, so nimmt die Ringlünette 50 die Position gemäß Fig. 10a ein. Dabei fluchtet jener Bereich 65 der abgekröpften Welle 47, auf welchem das Koppelzahnrad 47 festgelegt ist, mit dem Zentrum 66 der kreisförmigen Scheibe 49, welche in der kreisförmigen Ausnehmung der Ringlünette 50 drehbar gelagert ist. Dies hat zur Folge, dass sich das Koppelzahnrad 47 zusammen mit der abgekröpften Welle 47 und jener diese lagernden Kreisscheibe 49 innerhalb der Ringlünette 50 um die Achse 66 drehen kann - die Leistungsübertragung zwischen erstem und zweitem Differential 4, 5 in dem nicht invertierenden Zweig mit dem Koppelzahnrad 47 wird nicht beeinträchtigt, insbesondere kann dann auch die Freilauffunktion eintreten, falls an der Ausgangswelle eine aktive, durchziehende Last angreift.

Wird dagegen das Pedal 64 getreten, so bewegt sich die Ringlünettte 50 in ihre andere Endlage, und nun fluchtet der Mittelpunkt 66 der Kreisscheibe 49 nicht mehr mit dem das Koppelrad 47 tragenden Abschnitt 65 der abgekröpften Welle 47. Dadurch verklemmt sich diese Welle 47 gegenüber der Kreisscheibe 49, vergleichbar einem Kniegelenk, wobei Ober- und Unterschenkel nicht parallel zueinander verlaufen - das Koppelzahnrad 47 kann sich nicht mehr drehen, und dadurch ist eine Leistungsübertragung über dieses hinweg ist in dem nicht invertierenden Zweig ausgeschlossen. Da nun keine Leistungsverzweigung mehr auftritt, ist der Freiheitsgrad innerhalb des Getriebes 1, 1', 1", $1^{(4)}$, $1^{(5)}$, $1^{(6)}$, $1^{(7)}$ reduziert und zwischen der Eingangs- und Ausgangswelle 2, 3; 2', 3'; 2", 3" ist eine drehfeste Kopplung hergestellt, mithin die Freilauffunktion unterbunden.

So könnte beispielsweise bei einer Kopplung an ein Bremspedal 64 eines Fahrzeugs erreicht werden, dass bei einer Betätigung der Bremse die Antriebsräder nicht mehr frei laufen können, sondern an den Motor gekoppelt bleiben und von diesem abgebremst werden, entsprechend der sogenannten "Motorbremse".

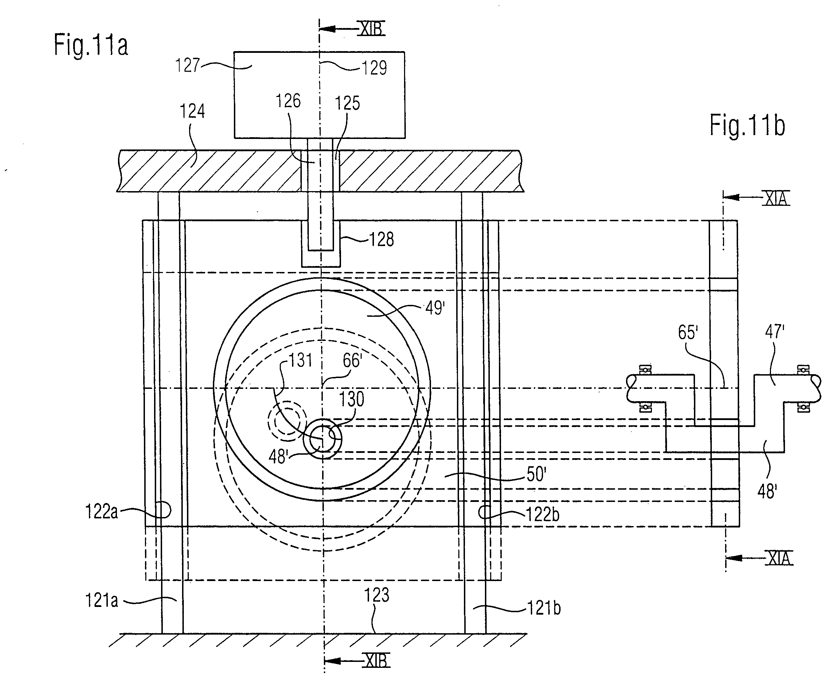

In den Figuren 11a und 11b ist eine weitere Mechanik wiedergegeben, mit welcher alterntiv zu der Mechanik nach den Figuren 10a bis 10c ein Koppelzweig innerhalb eines erfindungsgemäßen Getriebes 1, 1', 1", $1^{(4)}$, $1^{(5)}$, $1^{(6)}$, $1^{(7)}$ blockiert werden kann, um den Freilaufeffekt in einem erfindungsgemäßen Getriebe 1, 1', 1", $1^{(4)}$, $1^{(5)}$, $1^{(6)}$, $1^{(7)}$ zu unterdrücken bzw. auszuschalten.

Die Struktur und Wirkungsweise dieser Anordnung ist verwandt mit der Anordnung nach den Figuren 10a und 10b. Deshalb sollen Teile mit einander entsprechenden Funktionen mit einander entsprechenden Bezugszeichen versehen werden.

Beide Mechaniken verfügen über je ein scheibenförmiges Teil 50, 50' mit einer kreisförmigen Ausnehmung, worin eine Scheibe 49, 49' mit kreisförmigem Umfang um ihr Zentrum 66, 66' drehbar aufgenommen ist. Beide Scheiben 49, 50 bzw. 49', 50' einer Mechanik liegen in einer gemeinsamen Ebene.

In beiden Mechaniken verfügt die kreisförmige, drehbar gelagerte Scheibe 49, 49' über eine exzentrisch zu ihrem Zentrum 66, 66' angeordnete Ausnehmung, worin ein exzentrischer Abschnitt 48, 48' der zu steuernden Welle 47, 47' drehbar aufgenommen ist. Der mit dem zu steuernden Zahnrad oder Drehteil eines Koppelzweiges drehfest verbundene Hauptabschnitt 65, 65' der Welle 47, 47' verläuft lotrecht zu der Ebene der drehbaren Scheibe 49, 49'.

Beide Mechaniken verfügen über zwei verschiedene Steuerzustände:
In einem ersten Zustand, welcher dem Normalbetrieb des betreffenden Getriebes 1, 1', 1", $1^{(4)}$, $1^{(5)}$, $1^{(6)}$, $1^{(7)}$ entspricht, ist die Scheibe 50, 50' derart eingestellt, dass der Mittelpunkt 66, 66' der darin drehbar aufgenommenen Kreisscheibe 49, 49' exakt in einer Flucht mit dem Hauptabschnitt 65, 65' der Welle 47, 47' liegt. Demzufolge kann die kreisförmige Scheibe 49, 49' genau um diesen Hauptabschnitt 65, 65' der Welle 47, 47' rotieren, und demzufolge ist dies auch dem exzentrischen Abschnitt 48, 48' der Welle 47, 47' möglich - die Welle 47, 47' kann sich um ihre Achse drehen, der betreffende Koppelzweig kann eine Drehbewegung übertragen. Wenn beide Koppelzweige aktiv sind, ist die inhärente Freilauffunktion des erfindungsgemäßen Getriebes 1, 1', 1", $1^{(4)}$, $1^{(5)}$, $1^{(6)}$, $1^{(7)}$ aktiv.

In einem zweiten Zustand des Getriebes 1, 1', 1", $1^{(4)}$, $1^{(5)}$, $1^{(6)}$, $1^{(7)}$ ist die Scheibe 50, 50' jedoch so verstellt, dass der Mittelpunkt 66, 66' der darin drehbar aufgenommenen Kreisscheibe 49, 49' nicht mehr in einer Flucht mit dem Hauptabschnitt 65, 65' der Welle 47, 47' liegt. Demzufolge kann die kreisförmige Scheibe 49, 49' nicht um diesen Hauptabschnitt 65, 65' der Welle 47, 47' rotieren, und demzufolge ist dies auch dem exzentrischen Abschnitt 48, 48' der Welle 47, 47' nicht möglich - die Welle 47, 47' kann sich nun nicht mehr um ihre Achse drehen, weil der exzentrische Abschnitt 48 an der dafür notwendigen, exzentrischen Umlaufbewegung um die Welle 47, 47' gehindert ist. Damit ist der betreffende Koppelzweig blockiert, und demzufolge ist die dem erfindungsgemäßen Getriebe 1, 1', 1", $1^{(4)}$, $1^{(5)}$, $1^{(6)}$, $1^{(7)}$ ursprünglich inhärente Freilauffunktion deaktiviert.

Die Mechanik nach den Figuren 11a und 11b unterscheidet sich von der Mechanik nach den Figuren 10a und 10b genau genommen nur in der Art, wie die Scheibe 50, 50' verstellt wird. Während die Verstellung der Scheibe 50 bei der Mechanik nach den Figuren 10a und 10b eine Schwenkbewegung um eine Achse 54 ist, die parallel zu dem Hauptabschnitt 65 der Welle 47 verläuft, wird die Scheibe 50' nach den Figuren 11a und 11b innerhalb ihrer Ebene linear verschoben. Zu diesem Zweck ist anstelle der Drehlagerung um die Achse 54 eine Linearführung vorgesehen, bei der dargestellten Ausführungsform mittels zweier zueinander paralleler Führungsstäbe 121a, 121b, welche je eine Führungsöffnung 122a, 122b in der Führungs-Scheibe 50' durchgreifen. Die beiden Führungsöffnungen 122a, 122b verlaufen innerhalb der Ebene der Führungs-Scheibe 50' und parallel zu dieser Ebene. Sie durchsetzen die Führungs-Scheibe 50' vorzugsweise ganz, bei der Ausführungsform nach den Figuren 11a und 11b von einem unteren Teil des Getriebechassis 123 bis zu einem oberen Rahmenteil 124, wo sie jeweils festgelegt sind und dadurch das Rahmenteil 124 starr mit dem Getriebechassis 123 verbinden. Das obere Rahmenteil 124 verbindet die beiden Führungsstäbe 121a, 121b nach Art eines Jochs miteinander.

In dem oberen Rahmenteil 124 - oder wahlweise auch in dem Bereich 123 des Getriebechassis - ist eine Durchgangsbohrung 125 vorgesehen, durch die eine Abtriebswelle 126 eines Steuermotors 127 hindurchragt, dessen Gehäuse an dem Rahmenteil 124 oder Getriebechassis 123 festgelegt ist. Bevorzugt ist die Abtriebswelle 126 als Gewindespindel ausgebildet oder mit einer solchen verbunden. Das Gewinde dieser Spindel ist in einer mit einem Innengewinde versehenen Bohrung 128 der Führungs-Scheibe 50' eingeschraubt und schraub-verstellbar. Durch Aktivieren des Steuermotors 127 schraubt sich die Gewindespindel je nach Drehrichtung der Motor-Abtriebswelle 126 in die Gewinde-Bohrung 126 hinein oder aus dieser heraus. Da der Steuermotor 127 an dem Rahmenteil 124 oder Getriebechassis 123 unbeweglich festgelegt ist, kann sich dabei nicht die Abtriebswelle 126 in entlang deren Längsrichtung bzw. entlang ihrer Drehachse 129 verschieben; vielmehr wird die die Führungs-Scheibe 50' über deren Innengewinde-Bohrung 126 wie eine Schraubenmutter entlang der Spindelachse 129 verstellt, also bei der Anordnung nach Fig. 11a angehoben oder abgesenkt.

In den Figuren 11a und 11b ist eine erste Position der Führungs-Scheibe 50' in durchgezogenen Linien dargestellt. In dieser Position liegt der Mittelpunkt 66'. der Drehscheibe 49' exakt auf der Drehachse 65' der Welle 47'. In dieser Stellung kann der die Ausnehmung 130 in der Drehscheibe 49' exzentrisch durchsetzende Abschnitt 48' der Welle 47' zusammen mit der Drehscheibe 49' um die Drehachse 65' umlaufen - die Welle 47' ist damit insgesamt drehbar und der betreffende Koppelzweig nicht blockiert, mithin die dem Getriebe 1, 1', 1", $1^{(4)}$, $1^{(5)}$, $1^{(6)}$, $1^{(7)}$ inhärente Freilauffunktion aktiviert.

Nun kann durch Aktivieren des Steuermotors 127 die Führungs-Scheibe 50' entlang der Führungsstäbe 121a, 121b verstellt werden, beispielsweise abgesenkt bis in die in Fig. 11a gestrichelt angedeutete Position. Dort liegt nun der Mittelpunkt 66' der Drehscheibe 49' nicht mehr auf der Drehachse 65' der Welle 47', sondern unterhalb derselben. Dies ist möglich, indem dabei der exzentrische Abschnitt 48' der Welle 47' längs einer Kreisbahn 131 um die Drehachse 65' verschwenkt. Durch diese Bewegung ist zwar die Mechanik nicht beschädigt worden; nun kann jedoch der exzentrische Abschnitt 48' der Welle 47' nicht mehr um die Drehachse 65' schwenken, falls an der Welle 47' ein Drehmoment angreift, weil die Drehscheibe 49' außermittig zu der Dehachse 65' der Welle 47' liegt, und also eine gemeinsame Rotation dieser Teile nicht mehr möglich ist. Somit ist die Welle 47' und damit der betreffende Koppelzweig insgesamt blockiert, die erfindungsgemäße Freilauffunktion ist untedrückt.

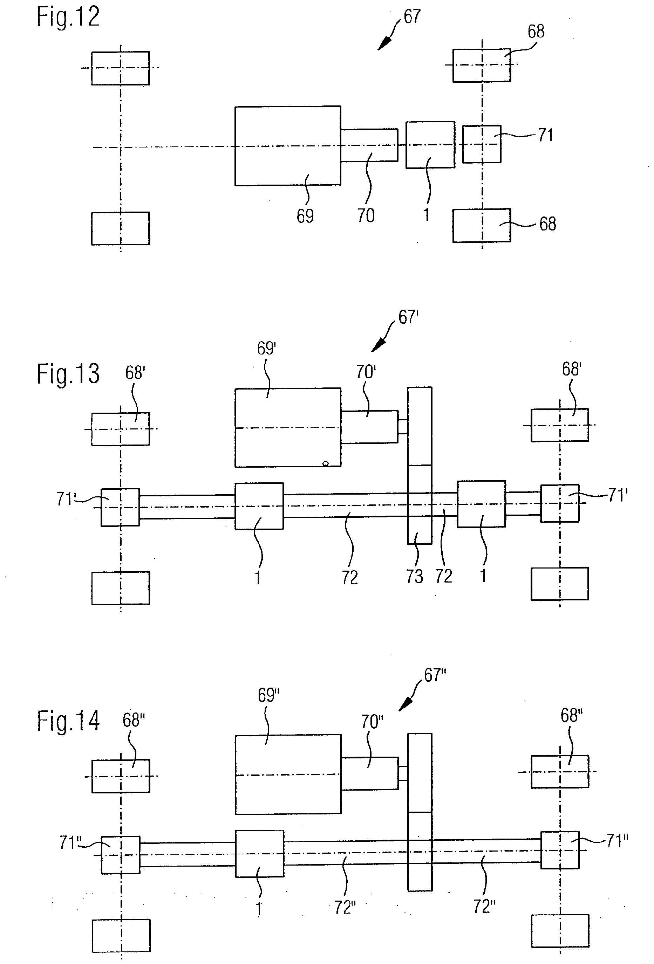

In den Fig. 12 bis 14 sind verschiedene Möglichkeiten für den Einsatz eines erfindungsgemäßen Getriebes 1, 1', 1", $1^{(4)}$, $1^{(5)}$, $1^{(6)}$, $1^{(7)}$ in einem Kraftfahrzeug dargestellt, insbesondere bei einem Kraftfahrzeug mit einem einzigen Motor, bevorzugt einem Verbrennungsmotor. Es könnte sich dabei aber auch um einen Elektromotor handeln, oder um einen Hybridantrieb.

In Fig. 12 ist schematisch der Antriebsstrang 67 eines Fahrzeugs mit zwei angetriebenen Rädern 68 dargestellt, wobei es für die Erfindung unwesentlich ist, ob die Vorder- oder Hinterräder angetrieben sind.

Die Antriebsenergie wird in einem Fahrzeugmotor 69 erzeugt und in einem nachgeschalteten Getriebe 70 - vorzugsweise einem Schaltgetriebe - in einen der jeweiligen Fahrsituation angepassten Drehzahlbereich transformiert. Bei dem Getriebe 70 kann es sich um jeden erdenklichen Getriebe-Typ handeln, z. B. auch um ein Automatikgetriebe oder um ein stufenloses Getriebe.

Zwischen dem Ausgang des Getriebes 70 und dem Eingang eines die beiden angetriebenden Räder 68 untereinander koppelnden Differentials 71 - welches mit der Erfindung nichts zu tun hat, sondern konventionell ausgebildet ist - ist ein erfindungsgemäßes Getriebe 1 mit Freilauffunktion eingeschalten, und zwar derart, dass die angetriebenen Räder 68 sich zwar schneller drehen können als der Ausgang des Getreibes 70, aber nicht langsamer.

Mit anderen Worten, bei jedem Gasgeben werden die Räder 68 über das Freilaufgetriebe 1 hinweg angetrieben; nimmt der Fahrer bei rollendem Fahzeug jedoch den Fuß vom Gas, so können die ansonsten angetriebenen Räder 68 frei laufen und die Motordrehzahl sozusagen "überholen". Das Fahrzeug rollt also ungebremst weiter, während der Fahrer ohne auszukuppeln und ohne in den Leerlauf zu schalten die Motordrehzahl auf die Leerlaufdrehzahl reduziert.

In Fig. 13 ist der Antriebsstrang 67' eines Fahzeugs mit Allradantrieb dargestellt. Die beiden Vorderräder 68' sind durch ein Differential 71' untereinander gekoppelt, und die Hinterräder 68' untereinander ebenso. Über je eine Kardanwelle 72 sind diese Differentiale 71' an einen zentralen Drehmomentverteiler 73 angeschlossen, der seinerseits von dem Motor 69' über ein Getriebe 70' angetrieben wird.

In jeder der beiden Kardanwellen 72 ist ein erfindungsgemäßes Getriebe 1 mit Freilauffunktion eingeschalten, und zwar jeweils derartig, dass die Eingangswelle 2 dem Drehmomentverteiler zugewandt ist, die Ausgangswelle dem jeweiligen Differential 71'. Dank der erfindungsgemäßen Freilauffunktion können die Räder 68' bei Bedarf schneller rotieren als die an den zentralen Drehmomentverteiler 73 gekoppelten Kardanwellen 72. Wird der Motor 69' demnach gedrosselt, so rollte das Auto in einer Art "Leerlauf" bis auf minimale Reibungsverluste ungebremst weiter, so dass Kraftstoff gespart werden kann. Dabei bleibt jedoch der Motor 69' in durchgehender Kopplung mit den Rädern 68', so dass bei einem Druck auf das Gaspedal das Fahrzeug sofort wieder beschleunigen kann.

Der in Fig. 14 wiedergegebene Antriebsstrang 67" eines anderen Fahzeugs mit Allradantrieb unterscheidet sich von dem zuvor beschriebenen nur dadurch, dass nur in einer Kardanwelle 72 ein erfindungsgemäßes Getriebe 1 eingeschalten ist, in der anderen dagegen nicht.

Da bei einem Fahzeug in der Kurvenfahrt zumeist die gelenkten Vorderräder 68" einen größeren Weg zurücklegen müssen als die ungelenkt folgenden Hinterräder 68", genügt es, in die Kardanwelle 72 zu den Vorderrädern 68" ein erfindungsgemäßes Getriebe 1 einzubauen, das es den Vorderrädern 68" ermöglicht, bei Bedarf schneller zu drehen als die Hinterräger 68", welche zwar über ein Differential 72" untereinander Bewegungsspielraum haben, aber ansonsten starr an das Getriebe 70" des Motors 69" gekoppelt sind. Damit kann ein erfindungsgemä0es Getriebe ein bei Allradantrieb ansonsten notwendiges Mittendifferential ersetzen.

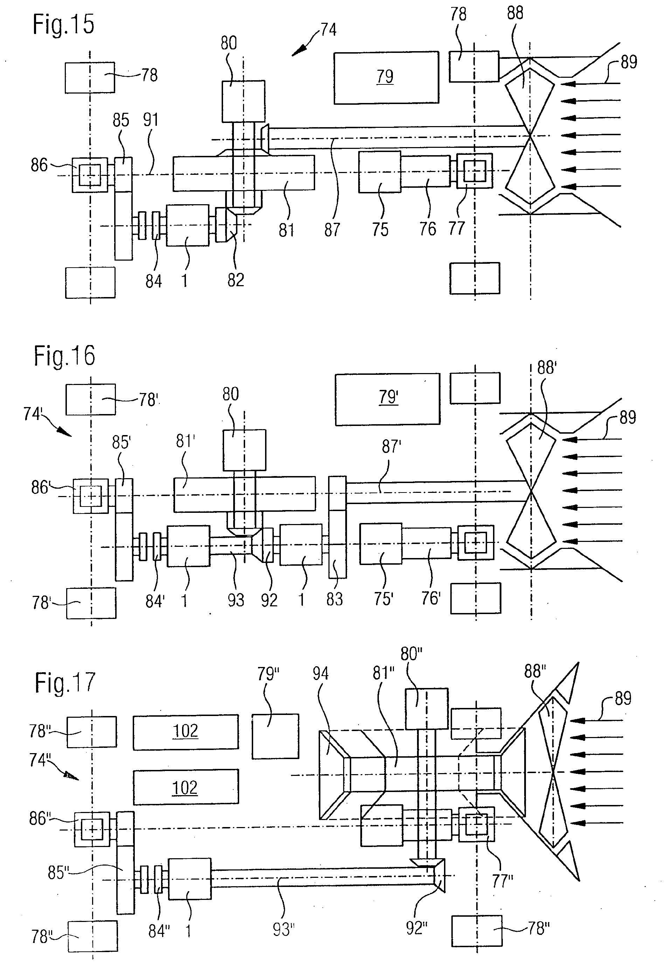

Im Gegensatz zu den Fig. 12 bis 14 sind in den Fig. 15 bis 17 verschiedene Möglichkeiten für den Einsatz eines erfindungsgemäßen Getriebes 1; 1'; 1" in einem Kraftfahrzeug mit mehreren, hybriden Antriebsmitteln dargestellt, vorzugsweise unter Verwendung eines Elektromotors sowie einer weiteren Antriebsquelle.

In Fig. 15 ist schematisch die Schaltungsanordnung 74 eines Fahrzeugs mit zwei durch einen Elektromotor 75 - ggf. über ein Getriebe 76 und ein Differential 77 angetriebenen Rädern 78 dargestellt, vorzugsweise der Vorderräder 78. Der Elektromotor 75 wird aus einem Akkumulator 79 gespeist.

Der Akkumulator 79 kann von einem Generator 80 auf- oder nachgeladen werden, der seinerseits zwecks Energieaufnahme drehfest an ein Schwungrad 81 gekoppelt ist.

Das Schwungrad 81 ist wiederum über ein Umlenkgetriebe 82, ein erfindungsgemäßes Getriebe 1 mit Freilauffunktion und eine Kupplung 83 sowie ggf. ein Übersetzungsgetriebe 85 und ein Differential 86 mit den Hinterrädern 78 gekoppelt.

Das erfindungsgemäße Getriebe 1 ist derart angeschlossen, dass seine Eingangswelle 2 dem Differential 86 zugewandt ist, seine Ausgangswelle 3 dagegen dem Schwungrad 81, so dass bei rollendem Fahrzeug und bei geschlossener Kupplung 84 das Schwungrad 81 angetrieben wird, bis es mindestens mit der selben Drehzahl rotiert wie die Kupplung 84; wird das Fahrzeug dagegen langsamer, so wird dank der efindungsgemäßen Freilauffunktion die Schwungscheibe 81 davon nicht abgebremst.

Das Schwungrad 81 kann bei einer ersten Ausführungsform nur über die Fahrzeugräder 78 angetrieben sein, was auch für die Ausführungsformen nach den Figuren 16 und 17 gilt.

Wie andererseits in der Zeichnung gemäß Fig. 15 bis 17 dargestellt ist, kann die Schwungscheibe 81 außerdem über eine weitere Welle 87 mit einem Propeller 88 im vorderen Bereich des Fahrzeugs gekoppelt sein und kann auch von jenem in Drehung versetzt werden, wenn dieser von Wind 89 oder Fahrtwind angeströmt wird.

Die Achse 90 des Schwungrades 81 verläuft im dargestellten Beispiel horizontal sowie quer zur Fahrtrichtung; das Schwungrad 81 kann sich bspw. in der vertikalen Mittellängsebene 91 des Fahrzeugs befinden. Bei der Ausführungsform nach Fig. 15 erfolgt die Einkoppelung von Antriebsenergie über das Differential 86 von einer Seite des Schwungrades 81, die Einkoppelung von Antriebsenergie von dem Propeller 88 dagegen an der dgegenüber liegenden Seite des Schwungrades 81. Dieses muss daher zwei Kegelverzahnungen aufweisen.

Um die Ankopplung an das Schwungrad 81' weiter zu vereinfachen, wird bei der Schaltungsanrodnung 74' nach Fig. 16 jegliche Antriebsenergie zunächst zusammengefasst und sodann nur an einer einzigen Seite des Schwungrades 81' eingeleitet.

Dazu ist im Rahmen des Umlenkgetriebes 82' das nicht unmittelbar an das Schwungrad 81' angeschlossene Kegelrad 92, dessen Rotationsachse in Fahrtrichtung verläuft, auf einer Welle 93 angeordnet, welche über das betreffende Kegelrad 92 in und entgegen der Fahrtrichtung übersteht. An jedem Ende dieser Welle 93 ist die Ausgangswelle 3 je eines erfindungsgemäßen Getriebes 1 angeschlossen. Die Eingangswelle 2 des rückwärtigen Freilauf-Getriebes 1 ist wie bei der Anordnung nach Fig. 15 über eine Kupplung 84', ein Übersetzungsgetriebe 85' und ein Differential 86' mit den Hinterrädern 78' gekoppelt. Die Eingangswelle 2 des in Fahrtrichtung gesehen vorderen Freilauf-Getriebes 1 ist über ein weiteres Übersetzungsgetriebe 83 mit der Welle 87' des Propellers 88' gekoppelt.

Infolge dieser Anordnung dreht sich die Welle 93 zwischen den beiden erfindungsgemäßen Freilauf-Getrieben 1 stets mindestens mit der schnelleren Drehzahl der beiden Getriebe-Eingangswellen 2 und teilt diese Drehzahl dem Schwungrad 81' mit, welches bei Bedarf sogar schneller laufen kann als diese beiden Getriebe-Eingangswellen 2, beispielsweise im Stillstand des Fahrzeugs. Dadurch dreht sich das Schwungrad 81' stets mit einer maximalen Drehzahl und versorgt den Generator 80' mit mechanischer Energie, um kontinuierlich Strom zum Laden des Akkus 79' zu erzeugen.

Bei der Schaltungsanordnung 74" nach Fig. 17 ist das Schwungrad 81" weiter nach vorne verlagert, beispielsweise in den Bereich der Motorhaube.

Der Antrieb der Vorderräder 78" durch einen Elektromotor 75" über ein Getriebe 76" und ein Differential 77" kann identisch zu den beiden zuvor beschriebenen Schaltanordnungen 74, 74' sein.

Ebenso ist die Ankopplung der Hinterräder 78" über ein Differential 86", Übersetzungsgetriebe 85", Kupplung 84", ein erfindungsgemäßes Freilauf-Getriebe 1 und eine Welle 93" grundsätzlich identisch zu den Ausführungformen gemäß Fig. 15 oder 16, wenngleich die Welle 93" in diesem Falle länger ausgeführt ist.

Auch die Ankopplung des Generators 80" an das Schwungrad 81" sowie die Energie-Einspeisung in den Akku 79" ist grundsätzlich genauso wie bei den zuvor beschriebenen Schaltungsanordnungen 74, 74'.

Bei dieser Ausführungsform ist jedoch das Schwungrad 81" selbst an seinem Umfang mit Schaufeln 94 ausgerüstet, ähnlich einem Wasserrad. Diese Schaufeln sind dem Wind 89 oder Fahrtwind ausgesetzt, der durch den Propeller 88" ggf. noch verstärkt und/oder auf die Schaufeln 94 gerichtet wird. Solchenfalls kann die Windenergie unmittelbar dem Schwungrad 81" zugeführt werden, wodurch Reibungsverluste minimiert werden.

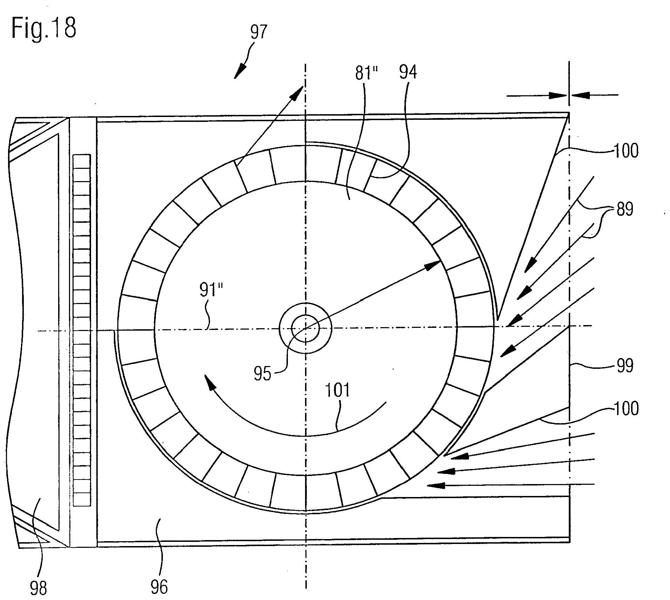

Bei der zuletzt beschriebenen Ausführungsform kann das Schwungrad 81" auch liegend eingebaut werden, also mit vertikal orientierter Drehachse 95. Dieser Fall ist in Fig. 18 dargestellt.

Man erkennt in Fig. 18 eine Draufsicht auf den Motorraum 96 eines Kraftfahrzeugs 97 bei hochgeklappter oder abgenommener Motorhaube; am linken Rand von Fig. 18 ist die Windschutzscheibe 98 zu sehen.

Um den Fahrtwind 89 den Schaufeln 94 des Schwungrades 81' optimal zuzuleiten, sind an der Vorderseite 99 des Fahzeugs 97 Lufteinlasskanäle 100 angeordnet, welche den anströmenden Wind 89 seitwärts umlenken, und zwar derart, dass did Luftströmung dem Schwungrad 81" im Bereich von dessen Schaufeln 94 etwa tangential zugeführt wird. Dadurch wird eine bestimmte Drehrichtung 101 des Schwungrades 81" vorgegeben.

Insbesondere in dem Fall einer liegenden Schwungradanordnung wie in Fig. 18 könnte die Welle 93" in oder entlang der vertikalen Fahrzeuglängsmittelebene 91" unterhalb des Fahrzeugbodens oder in einem Tunnel nach vorne verlaufen bis zu der vertikalen Drehachse 95.

Der mit dem ebenfalls an das liegend eingbaute Schwungrad 81" angeschlossenen Generator 80" erzeugte Strom kann wahlweise in den Akku 89" eingespeist werden oder zum kurzzeitigen Laden von Leistungskondensatoren 102 verwendet werden.

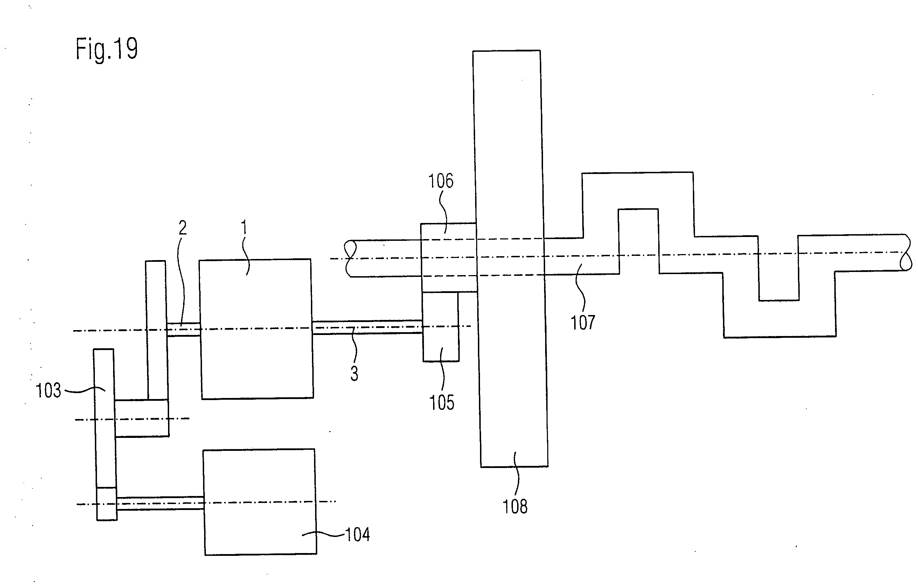

Ein weiterer vorteilhafter Anwendungsfall der Erfindung ist in Fig. 19 dargestellt. Man erkennt dort ein erfindungsgemäßes Freilauf-Getriebe 1, dessen Eingangswelle 2 - vorzugsweise mittels eines Übersetzungsgetriebes 103 - an einen elektrischen Anlasser 104 gekoppelt ist. Die Ausgangswelle 3 des Getriebes 1 ist - vorzugsweise über miteinander kämmende Zahnräder 105, 106 - drehfest mit einer Welle 107 gekoppelt, auf welcher ein Rad 108 befestigt ist.

Bei dem Rad 108 kann es sich beispielsweise um eine Riemenscheibe handeln für den Keilriemen eines Kraftfahrzeugs, der mit der Kurbelwelle gekoppelt ist, so dass mit dem Anlasser 104 der betreffende Motor gestartet werden könnte; es sind aber auch andere Anwendungsfälle denkbar; beispielsweise könnte das Rad 108 auch als Schwungrad oder Schwungscheibe ausgebildet sein, od. dgl.

Der Vorteil dier Anordnung nach Fig. 19 ist, dass der Anlasser 104 über das erfindungsgemäße Getriebe 1 permanent mit der angetriebenen Welle 107 bzw. dem angetriebenen Rad 108 gekoppelt bleiben kann. Hat er diese(s) ausreichend beschleunigt, kann der Anlasser 104 einfach abgeschalten werden, und dank der Freilauf-Funktion des erfindungsgemäßen Getriebes 1 wird die Welle 107 und das Rad 108 davon nicht abgebremst, sondern läuft frei weiter. Dadurch können aufwändige und verschleissbehaftete sowie störungsanfällige Kupplungen vermieden werden.

Bezugzeichenliste

| 1 | Getriebe | 26 | Außenumfang |
|---|---|---|---|
| 2 | Eingangswelle | 27 | Gehäusewand |
| 3 | Ausgangswelle | 28 | Gehäusewand |
| 4 | Erstes Differential | 29 | Eingangs-Zahnrad |

(fortgesetzt)

| | | | |
|---|---|---|---|
| 5 | Zweites Differential | 30 | Umlaufradträger |
| ww | Gehäuse | 31 | Drehanschluss |
| 7 | Kronenrad; Drehanschluss | 32 | Drehanschluss |
| 8 | Kronenrad; Drehanschluss | 33 | Zahnrad |
| 9 | Umlaufradträger | 34 | Umlaufradträger |
| 10 | Welle | 35 | Koppelzahnrad |
| 11 | Welle | 36 | Zahnrad |
| 12 | Befestigung | 37 | Zahnrad |
| 13 | Wälzlager | 38 | Drehanschluss |
| 14 | Wälzlager | 39 | Drehanschluss |
| 15 | Chassisteil | 40 | Zahnrad |
| 16 | Chassisteil | 41 | Zahnrad |
| 17 | Wälzlager | 42 | Drittes Differential |
| 18 | Wälzlager | 43 | Drehanschluss |
| 19 | Innenseite | 44 | Umlaufradträger |
| 20 | Innenseite | 45 | Drehanschluss |
| 21 | Achse | 46 | Zahnrad |
| 22 | Umlaufrad | 47 | Welle |
| 23 | Umlaufrad | 48 | Exzentrischer Abschnitt |
| 24 | Außenumfang | 49 | Kreisförmige Scheibe |
| 25 | Außenumfang | 50 | Ringlünette |
| 51 | Bogenförmige Seite | 76 | Getriebe |
| 52 | Zahnreihe | 77 | Differential |
| 53 | Spitze | 78 | Rad |
| 54 | Achse | 79 | Akkumulator |
| 55 | Motor | 80 | Generator |
| 56 | Getriebe | 81 | Schwungrad |
| 57 | Schnecke | 82 | Umlenkgetriebe |
| 58 | Schwenkbewegung | 83 | Übersetzungsgetriebe |
| 59 | Endschalter | 84 | Kupplung |
| 60 | Endschalter | 85 | Übersetzungsgetriebe |
| 61 | Schaltschütz | 86 | Differential |
| 62 | Schaltspule | 87 | Welle |
| 63 | Spannungsquelle | 88 | Propeller |
| 64 | Pedal | 89 | Wind |
| 65 | Bereich | 90 | Achse |
| 66 | Zentrum | 91 | Vertikale Mittellängsebene |
| 67 | Antriebsstrang | 92 | Kegelrad |
| 68 | Rad | 93 | Welle |
| 69 | Fahrzeugmotor | 94 | Schaufel |
| 70 | Schaltgetriebe | 95 | Drehachse |
| 71 | Differential | 96 | Motorraum |
| 72 | Kardanwelle | 97 | Kraftfahrzeug |
| 73 | Drehmomentverteiler | 98 | Windschutzscheibe |
| 74 | Schaltungsanordnung | 99 | Vorderseite |
| 75 | Elektromotor | 100 | Lufteinlasskanal |
| 101 | Drehrichtung | 126 | Abtriebswelle |
| 102 | Leistungskondensator | 127 | Steuermotor |
| 103 | Übersetzungsgetriebe | 128 | Bohrung |
| 104 | Anlasser | 129 | Drehachse |
| 105 | Zahnrad | 130 | Ausnehmung |

(fortgesetzt)

| | | | |
|---|---|---|---|
| 106 | Zahnrad | 131 | Kreisbahn |
| 107 | Welle | 132 | Umlaufradträger |
| 108 | Rad | 133 | Drehanschluss |
| 109 | Zahnrad | 134 | Drehanschluss |
| 110 | Zahnrad | 135 | Umnlaufradträger |
| 111 | Pfeil | 136 | Drehanschluss |
| 112 | Welle | 137 | Drehanschluss |
| 113 | Welle | | |
| 114 | Markierungspunkt | | |
| 115 | Zahnrad | | |
| 116 | doppelt abgekröpfter Bereich | | |
| 117 | doppelt abgekröpfter Bereich | | |
| 118 | Differential | | |
| 119 | Zahnrad | | |
| 120 | Zahnrad | | |
| 121 | Führungsstab | | |
| 122 | Führungsöffnung | | |
| 123 | Getriebechassis | | |
| 124 | Rahmenteil | | |
| 125 | Durchgangsbohrung | | |

## Patentansprüche

**1.** Freilaufmechanik (1,1',1",$1^{(4)}$,$1^{(5)}$,$1^{(6)}$,$1^{(7)}$), umfassend

a) eine mit einer Eingangsdrehzahl ($\omega_E$) rotierende Eingangswelle (2);
b) eine mit einer Ausgangsdrehzahl ($\omega_A$) rotierende Ausgangswelle (3);
c) ein dazwischen angeordnetes, erstes Differential (4), umfassend wenigstens ein in einem ersten Umlaufradträger (30) drehbar gelagertes, verzahntes Umlaufrad (22,23), das mit zwei internen Zahnkränzen an zwei weiteren Drehanschlüssen (31,32) des ersten Differentials (4) kämmt, deren Drehzahlen ($\omega_{12}$,$\omega_{13}$) die Drehzahl ($\omega_{11}$) des ersten Umlaufradträgers (30) in dem ersten Differential (4) bestimmen zu: $\omega_{11} = ½ * (\omega_{12} + \omega_{13})$;
d) ein zweites Differential (5), umfassend wenigstens ein in einem zweiten Umlaufradträger (34) drehbar gelagertes, verzahntes Umlaufrad (22,23), das mit zwei internen Zahnkränzen an zwei weiteren Drehanschlüssen (38,39) des zweiten Differentials (5) kämmt, deren Drehzahlen ($\omega_{22}$,$\omega_{23}$) die Drehzahl ($\omega_{21}$) des zweiten Umlaufradträgers (34) in dem zweiten Differential (5) bestimmen zu: $\omega_{21} = ½ * (\omega_{22} + \omega_{23})$;
e) wobei wenigstens ein Umlaufradträger (30,34) des ersten oder zweiten Differentials (4,5) weder mit der Eingangswelle (2) noch mit der Ausgangswelle (3) gekoppelt oder integriert ist;
f) wobei ein Drehanschluss (31,32) des ersten Differentials (4), dessen interner Zahnkranz mit wenigstens einem Umlaufrad (22,23) des ersten Differentials (4) kämmt, mit einem der drei Drehanschlüsse (34,38,39) des zweiten Differentials (5) derart gekoppelt ist, dass diese beiden miteinander gekoppelten Drehanschlüsse (22,23;34,38,39) mit der selben Drehzahl und dem selben Drehsinn rotieren;
g) wobei die beiden miteinander gekoppelten Drehanschlüsse (22,23;34,38,39) des ersten und zweiten Differentials (4,5), welche aufgrund ihrer Kopplung mit der selben Drehzahl und mit dem selben Drehsinn rotieren, weder mit der Eingangswelle (2) noch mit der Ausgangswelle (3) gekoppelt oder integriert sind;
h) und wobei ein weiterer Drehanschluss (31,32) des ersten Differentials (4), dessen interner Zahnkranz mit wenigstens einem Umlaufrad (22,23) des ersten Differentials (4) kämmt, mit einem weiteren der drei Drehanschlüsse (34,38,39) des zweiten Differentials (5) derart gekoppelt ist, dass diese beiden miteinander gekoppelten Drehanschlüsse (30,31;34,38,39) mit entgegengesetzt gleichen Drehzahlen rotieren
**dadurch gekennzeichnet, dass**
i) ein oder beide oder alle Differentiale (4;5;42) mit einer durchgehenden Welle (10;11) aufgebaut sind, die im Bereich ihrer beiden Enden in einem Gehäuse (6) drehbar gelagert ist, und die mit einem der drei zueinander koaxialen Drehteile (30,31,32;34,38,39) , also mit dem Umlaufträger (30, 34) oder mit einem der beiden Drehanschlüsse (31, 32; 38, 39), des betreffenden Differentials (4;5;42) derart gekoppelt ist, dass sie sich mit jenem

mitdreht, während die anderen beiden Drehteile (30,31,32;34,38,39) des betreffenden Differentials (4;5;42) auf der durchgehenden Welle drehbar gelagert sind.

2. Freilaufmechanik $(1,1',1'',1^{(4)},1^{(5)},1^{(6)},1^{(7)})$ nach Anspruch 1, **dadurch gekennzeichnet, dass** ein oder beide oder alle Differentiale (4;5;42) mit Kronenrädern (7,8) oder mit Kegelrädern aufgebaut sind.

3. Freilaufmechanik $(1,1',1'',1^{(4)},1^{(5)},1^{(6)},1^{(7)})$ nach einem der vorhergehenden Ansprüche, **dadurch gekennzeichnet, dass** es auf ein festes Übersetzungsverhältnis ü = $\omega_A/\omega_E$ eingestellt ist, so dass für die Ausgangsdrehzahl ($\omega_A$) gilt:

$$\omega_A = \ddot{u} \ast \omega_E,$$

solange auf die Ausgangswelle (3) und/oder auf wenigstens einen Drehanschluss (34,38,39) des zweiten Differentials (5) kein äußeres Drehmoment oder ein entgegen dessen Drehrichtung arbeitendes Gegen-Drehmoment einwirkt.

4. Freilaufmechanik $(1,1',1'',1^{(4)},1^{(5)},1^{(6)},1^{(7)})$ nach Anspruch 3, **dadurch gekennzeichnet, dass** bei einem äußeren Mit-Drehmoment an der Ausgangswelle (3) oder an wenigstens einem Drehanschluss (34,38,39) des zweiten Differentials (5) in der jeweiligen Ausgangsdrehrichtung gilt:

$$|\omega_A| > |\ddot{u} \ast \omega_E|.$$

5. Freilaufmechanik $(1,1',1'',1^{(4)},1^{(5)},1^{(6)},1^{(7)})$ nach einem der vorhergehenden Ansprüche, **gekennzeichnet durch** eine erste, drehbewegungsmäßige Kopplung zwischen je einem nicht mit dem jeweiligen Umlaufradträger (30;34) gekoppelten Drehanschluss (32,33;38,39;43,45) zweier unterschiedlicher Differentiale (4;5;42), vorzugsweise des ersten und zweiten Differentials (4,5), insbesondere derart, dass ihre Drehzahlen identisch sind.

6. Freilaufmechanik $(1,1',1'',1^{(4)},1^{(5)},1^{(6)},1^{(7)})$ nach einem der vorhergehenden Ansprüche, **gekennzeichnet durch** eine zweite, drehbewegungsmäßige Kopplung zwischen zwei unterschiedlichen Differentialen (4;5;42), insbesondere derart, dass die Drehzahlen der miteinander gekoppelten Drehanschlüsse (30,32,33;34,38,39;43,44,45) entgegengesetzt identisch sind.

7. Freilaufmechanik $(1,1',1'',1^{(4)},1^{(5)},1^{(6)},1^{(7)})$ nach einem der vorhergehenden Ansprüche, **dadurch gekennzeichnet, dass** die Eingangswelle (2) mit dem ersten Differential (4) gekoppelt ist, vorzugsweise auf symmetrische Weise, d.h. insbesondere, nur mit dessen Umlaufradträger (30).

8. Freilaufmechanik $(1,1',1'',1^{(4)},1^{(5)},1^{(6)},1^{(7)})$ nach einem der vorhergehenden Ansprüche, **dadurch gekennzeichnet, dass** die Ausgangswelle (3) mit dem zweiten Differential (5) gekoppelt ist, vorzugsweise auf asymmetrische Weise, d.h. bevorzugt nicht oder nicht allein mit dessen Umlaufradträger (34), sondern ggf. auch mit einem Drehanschluss (38,39) des zweiten Differentials (5), dessen interner Zahnkranz mit wenigstens einem verzahnten Umlaufrad (22,23) kämmt.

9. Freilaufmechanik $(1,1',1'',1^{(4)},1^{(5)},1^{(6)},1^{(7)})$ nach einem der vorhergehenden Ansprüche, **dadurch gekennzeichnet, dass** die Ausgangswelle (3) mit einem dritten Differential (42) gekoppelt ist, wobei vorzugsweise das dritte Differential (42) mit zwei Drehanschlüssen (34,38,39) des zweiten Differentials (5) gekoppelt ist, vorzugsweise auf asymmetrische Weise, also mit dessen Umlaufradträger (34) einerseits sowie mit einem Drehanschluss (38,39) des zweiten Differentials (5), dessen interner Zahnkranz mit wenigstens einem verzahnten Umlaufrad (22,23) des zweiten Differentials (5) kämmt.

10. Freilaufmechanik $(1,1',1'',1^{(4)},1^{(5)},1^{(6)},1^{(7)})$ nach einem der vorhergehenden Ansprüche, **dadurch gekennzeichnet, dass** wenigstens einer der beiden mit dem zweiten Differential (5) gekoppelten Drehanschlüsse (30,31) des ersten Differentials (4) von außen unbeeinflusst bleibt, so dass sich seine Drehzahl ($\omega_{12},\omega_{13}$) frei einstellen kann, insbesondere entgegengesetzt gleich dem anderen, mit dem zweiten Differential (5) gekoppelten Drehanschluss (30,31) des ersten Differentials (4), ggf. zusätzlich der doppelten Drehzahl ($\omega_{11}$) des ersten Umlaufradträgers (30), wenn auf die Ausgangswelle (3) und/oder auf wenigstens einen Drehanschluss (34,38,39) des zweiten Differentials (5) ein in dessen Drehrichtung arbeitendes Mit-Drehmoment einwirkt, so dass sich unter dem Einfluss dieses Mit-

Drehmomentes die Ausgangsrehzahl ($\omega_A$) erhöhen kann, ohne dass die Eingangsdrehzahl ($\omega_E$) davon beeinflusst wird.

11. Freilaufmechanik ($1,1',1'',1^{(4)},1^{(5)},1^{(6)},1^{(7)}$) nach einem der vorhergehenden Ansprüche, **dadurch gekennzeichnet, dass** durch Einflussnahme auf ein einziges Koppelzahnrad (35) zwischen dem ersten und zweiten Differential (4,5) die Freilauffunktion ausgeschaltet wird, vorzugsweise indem das betreffende Koppelzahnrad (35) in einen undrehbaren Zustand versetzt wird, um die Freilauffunktion auszuschalten, wobei insbesondere das Koppelzahnrad (35) an einer mehrfach abgekröpften Welle (47) befestigt ist, die wiederum exzentrisch in wenigstens einer Scheibe (49) gelagert ist, welche ihrerseits in einer verschwenkbaren und/oder verschiebbaren Ringlünette (50) verdrehbar aufgenommen ist.

12. Freilaufmechanik ($1,1',1'',1^{(4)},1^{(5)},1^{(6)},1^{(7)}$) nach einem der vorhergehenden Ansprüche, **dadurch gekennzeichnet, dass** wenigstens eine Kopplung zwischen dem ersten Differential (4) und dem zweiten Differential (5), vorzugsweise diejenige Kopplung, deren miteinander gekoppelte Drehanschlüsse (22,23;34,38,39) des ersten und zweiten Differentials (4,5) aufgrund dieser Kopplung mit der selben Drehzahl und mit dem selben Drehsinn rotieren, insbesondere beide Kopplungen zwischen jenen Differentialen (4,5), von außen weder zugänglich noch beeinflussbar ist (sind), sowie vorzugsweise intern allenfalls über eine verschwenkbare und/oder verschiebbare Ringlünette (50), welche mit einem Bereich einer mehrfach abgekröpften Welle (47) eines Zahnrades (35,36,37) der betreffenden Kopplung zusammenwirkt, welcher exzentrisch zu der Drehachse dieses Zahnrades (35,36,37) verläuft.

13. Antriebsstrang eins Fahrzeugs, enthaltend eine Freilaufmechanik ($1,1',1'',1^{(4)},1^{(5)},1^{(6)},1^{(7)}$) nach einem der vorhergehenden Ansprüche, **dadurch gekennzeichnet, dass** die Freilaufmechanik in dem Antriebsstrang (67) derart eingeschalten ist, dass im Schiebebetrieb die Freilauffunktion den Antriebsmotor (69) von dem Antriebsstrang (67) zu den Rädern (68) entkoppelt, und/oder dass sie zwischen den Antriebsstrang (67) und einem Schwungrad (81) eingeschalten ist, und/oder dass sie zwischen den Antriebsstrang (67) und einen Anlasser (104) oder zwischen ein Schwungrad (81) und einen Anlasser (104) eingeschalten ist.

**Claims**

1. Freewheel mechanism ($1,1',1'',1^{(4)},1^{(5)},1^{(6)},1^{(7)}$), comprising:

   a) an input shaft (2) rotating with an input rotational speed ($\omega_E$);
   b) an output shaft (3) rotating with an output rotational speed ($\omega_A$);
   c) a first differential (4) arranged therebetween and comprising at least one geared epicyclic wheel (22,23) which is pivoted in a first epicyclic wheel carrier (30) and is in meshing engagement with two internal toothed rims at two further rotational connections (31,32) of the first differential (4), whose rotational speeds ($\omega_{12},\omega_{13}$) define the rotational speed ($\omega_{11}$) of the first epicyclic wheel carrier (30) in the first differential (4) as: $\omega_{11} = \frac{1}{2} * (\omega_{12} + \omega_{13})$;
   d) a second differential (5), comprising at least one geared epicyclic wheel (22,23) which is pivoted in a second epicyclic wheel carrier (34) and is in meshing engagement with two internal toothed rims at two further rotational connections (38,39) of the second differential (5), whose rotational speeds ($\omega_{22},\omega_{23}$) define the rotational speed ($\omega_{21}$) of the second epicyclic wheel carrier (34) in the second differential (5) as: $\omega_{21} = \frac{1}{2} * (\omega_{22} + \omega_{23})$;
   e) wherein at least one epicyclic wheel carrier (30,34) of the first or second differential (4,5) is coupled or integrated neither to the input shaft (2) nor to the output shaft (3);
   f) wherein a rotational connection (31,32) of the first differential (4), whose internal toothed rim is in meshing engagement with at least one epicyclic wheel (22,23) of the first differential (4), is coupled to one of the three rotational connections (34,38,39) of the second differential (5) in such a way, that these two rotational connections (22,23;34,38,39) coupled with each other rotate with the same rotational speed an din the same direction of rotation;
   g) wherein the two rotational connections (22,23;34,38,39) of the first and second differential (4,5), which are coupled with each other and which, due to their coupling, rotate with the same rotational speed and with the same direction of rotation, are coupled or integrated neither to the input.shaft (2) nor to the output shaft (3);
   h) and wherein a further rotational connection (31,32) of the first differential (4), whose internal toothed rim is in meshing engagement with at least one epicyclic wheel (22,23) of the first differential (4), is coupled to a further one of the three rotational connections (34,38,39) of the second differential (5) in such a way that these two rotational connections (30,31;34,38,39) rotate with identical rotational speeds in opposite directions;
   **characterized in that**

i) one or both or all differentials (4;5;42) are constructed with a through shaft (10;11), which is pivoted in the area of its both ends in the housing (6), and which is coupled with one of the three rotating parts (30,31,32;34,38,39) coaxial to each other, i.e. with the epicyclic wheel carrier (30,34) or with one of the two rotational connections (30,31;34,38,39), of the regarding differential (4;5;42) in such a way that it rotates together with the latter, while the other two rotating parts (30,31,32;34,38,39) of the regarding differential (4;5;42) are pivoted on the through shaft.

2. Freewheel mechanism $(1,1',1",1^{(4)},1^{(5)},1^{(6)},1^{(7)})$ according to claim 1, **characterized in that** one or both or all differentials (4;5;42) are constructed with crown wheels (7,8) or with bevel wheels.

3. Freewheel mechanism $(1,1',1",1^{(4)},1^{(5)},1^{(6)},1^{(7)})$ according to one of the preceding claims, **characterized in that** it is adjusted to a fixed transmission ratio $ü = \omega_A/\omega_E$, so that it applies for the output rotational speed ($\omega_A$):

$$\omega_A = ü * \omega_E,$$

as long as no external torque and no reaction torque directed against its direction of rotation acts on the output shaft (3) and/or on at least one rotational connection (34,38,39) of the second differential (5).

4. Freewheel mechanism $(1,1',1",1^{(4)},1^{(5)},1^{(6)},1^{(7)})$ according to claim 3, **characterized in that** in case of an external coaction torque acting on the output shaft (3) or on at least one rotational connection (34,38,39) of the second differential (5), it applies in the regarding output direction of rotation:

$$|\omega_A| > |ü * \omega_E|.$$

5. Freewheel mechanism $(1,1',1",1^{(4)},1^{(5)},1^{(6)},1^{(7)})$ according to one of the preceding claims, **characterized by** a first rotational coupling between rotational connections (32,33;38,39;43,45), which are not coupled to the regarding epicyclic wheel carrier (30;34), of two different differentials (4;5;42), preferably of the first and second differential (4,5), especially in such a way that their rotational speeds are identical.

6. Freewheel mechanism $(1,1',1",1^{(4)},1^{(5)},1^{(6)},1^{(7)})$ according to one of the preceding claims, **characterized by** a second rotational coupling between two different differentials (4;5;42), especially in such a way that the rotational speeds of the rotational connections (30,32,33;34,38,39;43,44,45) coupled with each other are identical with opposite directions.

7. Freewheel mechanism $(1,1',1",1^{(4)},1^{(5)},1^{(6)},1^{(7)})$ according to one of the preceding claims, **characterized in that** the input shaft (2) is coupled with the first differential (4), preferably in a symmetrical manner, i.e. only with the epicyclic wheel carrier (30) thereof.

8. Freewheel mechanism $(1,1',1",1^{(4)},1^{(5)},1^{(6)},1^{(7)})$ according to one of the preceding claims, **characterized in that** the output shaft (3) is coupled with the second differential (5), preferably in an asymmetrical manner, i.e. preferentially not or not only with the epicyclic wheel carrier (34) thereof, but, if applicable, also with a rotary connection (38,39) of the second differential (5), whose internal toothed rim is in meshing engagement with at least one toothed epicyclic wheel (22,23).

9. Freewheel mechanism $(1,1',1",1^{(4)},1^{(5)},1^{(6)},1^{(7)})$ according to one of the preceding claims, **characterized in that** the output shaft (3) is coupled with a third differential (42), wherein the third differential (42) is preferably coupled with two rotational connections (34,38,39) of the second differential (5), preferably in an asymmetrical manner, i.e. with the epicyclic wheel carrier (34) thereof at the one side and with a rotational connection (38,39) of the second differential (5), whose internal toothed rim is in meshing engagement with at least one toothed epicyclic wheel (22,23) of the second differential (5).

10. Freewheel mechanism $(1,1',1",1^{(4)},1^{(5)},1^{(6)},1^{(7)})$ according to one of the preceding .claims, **characterized in that** at least one of the two rotational connections (30,31) of the first differential (4) coupled with the second differential (5) remains unaffected from the outside, so that its rotational speed $(\omega_{12}, \omega_{13})$ can attune freely, especially contrarily equal to the other rotational connection (30,31) of the first differential (4), which is coupled with the second differential (5), if necessary in addition to the double rotational speed $(\omega_{11})$ of the first epicyclic wheel carrier (30), if a coaction torque moment acting on the output shaft (3) and/or on at least one rotational connection (34,38,39) of the second differential (5) in the rotational direction thereof, so that the output rotational speed $(\omega_A)$ can increase under the influence of this coaction torque, without influencing the input rotational speed $(\omega_E)$.

11. Freewheel mechanism $(1,1',1'',1^{(4)},1^{(5)},1^{(6)},1^{(7)})$ according to one of the preceding claims, **characterized in that** the freewheeling function is turned off by influencing one single toothed coupling wheel (35) between the first and the second differential (4,5), preferably by bringing the relevant toothed coupling wheel (35) into a non-rotatable state, so that the freewheeling function is turned off, especially wherein the toothed coupling wheel (35) is mounted on a shaft (47) repeatedly bent at right angles, which is excentrically mounted in at least one disc (49), which in turn is rotatably housed in a pivotable and/or displaceable ring lunette (50).

12. Freewheel mechanism $(1,1',1'',1^{(4)},1^{(5)},1^{(6)},1^{(7)})$ according to one of the preceding claims, **characterized in that** at least one coupling between the first differential (4) and the second differential (5), preferably that coupling, whose rotational connections (22,23;34,38,39) of the first and of the second differential (4,5) coupled to each other rotate with the same rotational speed and with the same direction of rotation due to this coupling, especially the two couplings between those differentials (4,5), is (are) neither accessible nor influenceable from the outside, and preferably internally at best via a pivotable and/or displaceable ring lunette (50), which cooperates with a part of the repeatedly bent shaft (47) of a toothed wheel (35,36,37) of the relevant coupling, which extends excentrically to the axis of rotation of this toothed wheel (35,36,37).

13. Drive train of a vehicle, comprising a freewheeling mechanism $(1,1',1'',1^{(4)},1^{(5)},1^{(6)},1^{(7)})$ according to one of the preceding claims, **characterized in that** the freewheeling mechanism is interposed within the drive train (67) in such a way, that during a pushing operation, the freewheeling function decouples the drive motor (69) from the drive train (67) to the wheels (68), and/or **in that** it is interposed between the drive train (67) and a flywheel (81), and/or **in that** it is interposed between the drive train (67) and a starter (104) or between a flywheel (81) and a starter (104).

## Revendications

1. Mécanisme de roue libre $(1, 1', 1'', 1^{(4)}, 1^{(5)}, 1^{(6)}, 1^{(7)})$ comprenant

   a) un arbre d'entrée (2) rotatif avec une vitesse de rotation d'entrée $(\omega_E)$;
   b) un arbre de sortie (3) rotatif avec une vitesse de rotation de sortie $(\omega_A)$ ;
   c) un premier différentiel (4) interposé, comprenant au moins une roue satellite (22, 23) dentée, montée à rotation dans un premier porte-satellites (30), ladite roue satellite s'engrenant avec deux couronnes dentées internes au niveau de deux autres raccords tournants (31, 32) du premier différentiel (4), dont les vitesses de rotation $(\omega_{12}, \omega_{13})$ déterminent la vitesse de rotation $(\omega_{11})$ du premier porte-satellites (30) dans le premier différentiel (4) comme suit : $\omega_{11} = \frac{1}{2} * (\omega_{12} + \omega_{13})$ ;
   d) un deuxième différentiel (5) comprenant au moins une roue satellite (22, 23) dentée, montée à rotation dans un second porte-satellites (34), ladite roue satellite s'engrenant avec deux couronnes dentées internes au niveau de deux autres raccords tournants (38, 39) du deuxième différentiel (5), dont les vitesses de rotation $(\omega_{22}, \omega_{23})$ déterminent la vitesse de rotation $(\omega_{21})$ du second porte-satellites (34) dans le deuxième différentiel (5) comme suit : $\omega_{21} = \frac{1}{2} * (\omega_{22} + \omega_{23})$ ;
   e) en ce qu'au moins un porte-satellites (30, 34) du premier ou du deuxième différentiel (4, 5) n'est couplé ou intégré ni à l'arbre d'entrée (2) ni à l'arbre de sortie (3) ;
   f) en ce qu'un raccord tournant (31, 32) du premier différentiel (4), dont la couronne dentée interne s'engrène avec au moins une roue satellite (22, 23) du premier différentiel (4), est couplé à l'un des trois raccords tournants (34, 38, 39) du deuxième différentiel (5) de telle sorte que ces deux raccords tournants (22, 23 ; 34, 38, 39) couplés entre eux tournent à la même vitesse de rotation et dans le même sens de rotation ;
   g) en ce que les deux raccords tournants (22, 23 ; 34, 38, 39) couplés entre eux du premier et du deuxième différentiel (4, 5), lesquels en raison de leur couplage tournent à la même vitesse de rotation et dans le même sens de rotation, ne sont couplés ou intégrés ni à l'arbre d'entrée (2) ni à l'arbre de sortie (3) ;
   h) et en ce qu'un autre raccord tournant (31, 32) du premier différentiel (4) dont la couronne dentée interne s'engrène avec au moins une roue satellite (22, 23) du premier différentiel (4), est couplé à un autre des trois raccords tournants (34, 38, 39) du deuxième différentiel (5) de telle sorte que ces deux raccords tournants (30, 31 ; 34, 38, 39) couplés entre eux tournent à des vitesses de rotation diamétralement opposées, **caractérisé en ce qu'**

i) un ou deux ou tous les différentiels (4 ; 5 ; 42) sont conçus avec un arbre continu (10 ; 11) qui est monté à rotation au niveau de ses deux extrémités dans un boîtier (6) et qui est couplé à l'une des trois parties rotatives (30, 31, 32 ; 34, 38, 39) coaxiales les unes par rapport aux autres, donc au porte-satellites (30, 34) ou à l'un des deux raccords tournants (31, 32 ; 38, 39) du différentiel concerné (4 ; 5 ; 42) de telle sorte qu'il tourne simultanément avec celui-ci tandis que les deux autres parties rotatives (30, 31, 32 ; 34, 38, 39) du différentiel concerné (4 ; 5 ; 42) sont montées à rotation sur l'arbre continu.

2. Mécanisme de roue libre (1, 1', 1', 1", 1$^{(4)}$, 1$^{(5)}$, 1$^{(6)}$, 1$^{(7)}$) selon la revendication 1, **caractérisé en ce qu'**un ou deux ou tous les différentiels (4 ; 5 ; 42) sont montés avec des roues dentées coniques (7, 8) ou des roues coniques.

3. Mécanisme de roue libre (1, 1', 1", 1$^{(4)}$, 1$^{(5)}$, 1$^{(6)}$, 1$^{(7)}$) selon l'une des revendications précédentes, **caractérisé en ce qu'**un réglage est effectué selon un rapport de réduction fixe ü = $\omega_A/\omega_E$ de sorte que la vitesse de rotation de sortie ($\omega_A$) soit :

$$\omega_A = \ddot{u}^{*}\,\omega_E,$$

tant qu'aucun couple de rotation externe ou un contre-couple de rotation appliqué dans le sens contraire de sa rotation n'agit sur l'arbre de sortie (3) et/ou sur au moins un raccord tournant (34, 38, 39) du deuxième différentiel (5).

4. Mécanisme de roue libre (1, 1', 1', 1", 1$^{(4)}$, 1$^{(5)}$, 1$^{(6)}$, 1$^{(7)}$) selon la revendication 3, **caractérisé en ce que** pour un couple d'entraînement externe sur l'arbre de sortie (3) ou sur au moins un raccord tournant (34, 38, 39) du deuxième différentiel (5) dans le sens de rotation de sortie respectif s'applique :

$$|\omega_A| > |\ddot{u}^{*}\,\omega_E|.$$

5. Mécanisme de roue libre (1, 1', 1', 1", 1$^{(4)}$, 1$^{(5)}$, 1$^{(6)}$, 1$^{(7)}$) selon l'une des revendications précédentes, **caractérisé par** un premier couplage à rotation entre respectivement un raccord tournant (32, 33 ; 38, 39 ; 43, 45) non couplé au porte-satellite (30 ; 34) respectif de deux différentiels (4 ; 5 ; 42) différents, de préférence du premier et du deuxième différentiel (4,5), en particulier de telle sorte que leurs vitesses de rotation sont identiques.

6. Mécanisme de roue libre (1, 1', 1", 1$^{(4)}$, 1$^{(5)}$, 1$^{(6)}$, 1$^{(7)}$) selon l'une des revendications précédentes, **caractérisé par** un second couplage à rotation entre deux différentiels (4 ; 5 ; 42) différents, en particulier de telle sorte que les vitesses de rotation des raccords tournants couplés entre eux (30, 32, 33 ; 34, 38, 39 ; 43, 44, 45) sont identiques en sens opposé.

7. Mécanisme de roue libre (1, 1', 1', 1", 1$^{(4)}$, 1$^{(5)}$, 1$^{(6)}$, 1$^{(7)}$) selon l'une des revendications précédentes, **caractérisé en ce que** l'arbre d'entrée (2) est couplé au premier différentiel (4), de préférence de manière symétrique, c'est-à-dire en particulier seulement à son porte-satellites (30)

8. Mécanisme de roue libre (1, 1', 1',1", 1$^{(4)}$, 1$^{(5)}$, 1$^{(6)}$, 1$^{(7)}$) selon l'une des revendications précédentes, **caractérisé en ce que** l'arbre de sortie (3) est couplé au deuxième différentiel (5), de préférence de manière asymétrique, c'est-à-dire de préférence pas ou pas seulement à son porte-satellites (34), mais le cas échéant aussi à un raccord tournant (38, 39) du deuxième différentiel (5) dont la couronne dentée interne s'engrène avec au moins une roue satellite dentée (22, 23).

9. Mécanisme de roue libre (1, 1', 1', 1", 1$^{(4)}$, 1$^{(5)}$, 1$^{(6)}$, 1$^{(7)}$) selon l'une des revendications précédentes, **caractérisé en ce que** l'arbre de sortie (3) est couplé à un troisième différentiel (42), **en ce que** de préférence le troisième différentiel (42) est couplé au deux raccords tournants (34, 38, 39) du deuxième différentiel (5), de préférence de manière asymétrique, par conséquent à son porte-satellites (34) d'une part ainsi qu'à un raccord tournant (38, 39) du deuxième différentiel (5), dont la couronne dentée interne s'engrène avec au moins une roue satellite dentée (22, 23) du deuxième différentiel (5).

**10.** Mécanisme de roue libre (1, 1', 1", 1$^{(4)}$, 1$^{(5)}$, 1$^{(6)}$, 1$^{(7)}$) selon l'une des revendications précédentes, **caractérisé en ce qu'**au moins l'un des deux raccords tournants (30, 31), qui est couplé au deuxième différentiel (5), du premier différentiel (4) reste non influencé de l'extérieur, afin que sa vitesse de rotation ($\omega_{12}$, $\omega_{13}$) puisse être librement réglée, en particulier diamétralement opposée à l'autre raccord tournant (30, 31), qui est couplé au deuxième différentiel (5), du premier différentiel (4), le cas échéant en plus de la double vitesse de rotation ($\omega_{11}$) du premier porte-satellites (30) lorsqu'un couple d'entraînement appliqué dans son sens de rotation agit sur l'arbre de sortie (3) et/ou sur au moins un raccord tournant (34, 38, 39) du deuxième différentiel (5), de telle sorte que la vitesse de rotation de sortie ($\omega_A$) peut augmenter sous l'effet de ce couple d'entraînement, sans avoir d'incidence sur la vitesse de rotation d'entrée ($\omega_E$).

**11.** Mécanisme de roue libre (1, 1', 1', 1", 1$^{(4)}$, 1$^{(5)}$, 1$^{(6)}$, 1$^{(7)}$) selon l'une des revendications précédentes, **caractérisé en ce qu'**en agissant sur une seule roue dentée de couplage (35) entre le premier et le deuxième différentiel (4, 5) la fonction roue libre est désactivée, de préférence en mettant la roue dentée de couplage (35) concernée dans un état non rotatif pour désactiver la fonction roue libre, **en ce qu'**en particulier la roue dentée de couplage (35) est fixée sur un arbre (47) plusieurs fois coudé, qui à son tour est monté excentriquement dans au moins un disque (49), lequel à son tour est logé à rotation dans une lunette annulaire (50) susceptible de pivoter et/ou déplaçable.

**12.** Mécanisme de roue libre (1, 1', 1', 1", 1$^{(4)}$, 1$^{(5)}$, 1$^{(6)}$, 1$^{(7)}$) selon l'une des revendications précédentes, **caractérisé en ce qu'**au moins un couplage entre le premier différentiel (4) et le deuxième différentiel (5), de préférence le couplage dont les raccords tournants (22, 23 ; 34, 38, 39) couplés entre eux du premier et du deuxième différentiel (4, 5) en raison de ce couplage tournent à la même vitesse de rotation et dans le même sens de rotation, en particulier les deux couplages entre ces différentiels (4, 5), ni accessible(s) ni influençable(s) de l'extérieur, ainsi que de préférence au plus au niveau interne par l'intermédiaire d'une lunette annulaire (50) susceptible de pivoter et/ou déplaçable, laquelle coopère avec une zone d'un arbre (47) plusieurs fois coudé d'une roué dentée (35, 36, 37) du couplage concerné qui est excentrique par rapport à l'axe de rotation de cette roue dentée (35, 36, 37).

**13.** Groupe motopropulseur d'un véhicule comprenant un mécanisme de roue libre (1, 1', 1', 1", 1$^{(4)}$, 1$^{(5)}$, 1$^{(6)}$, 1$^{(7)}$) selon l'une des revendications précédentes, **caractérisé en ce que** le mécanisme de roue libre est connecté dans le groupe motopropulseur (67) de telle sorte qu'en régime de décélération la fonction roue libre découple le moteur d'entraînement (69) du groupe motopropulseur (67) par rapport aux roues (68), et/ou qu'il est connecté entre le groupe motopropulseur (67) et un volant d'inertie (81), et ou qu'il est connecté entre le groupe motopropulseur (67) et un démarreur (104) ou entre un volant d'inertie (81) et un démarreur (104).

Fig.1

Fig.2

Fig.3

Fig.4

Fig.5

Fig.6

Fig.7

Fig.8

Fig.9

## Fig.10a

## Fig.10b

## Fig.10c

Fig.11b

Fig.11a

XIA

XIA

XIB

XIB

47'

48'

65'

50'

122b

121b

49'

66'

130

131

48'

123

128

129

125

126

127

124

122a

121a

Fig.12

67

68

71

69    70    1

68

Fig.13

69'

67'

70'

68'

68'

71'

71'

1

72

73  72  1

Fig.14

69"

67"

70"

68"

68"

71"

71"

1

72"

72"

Fig.15

Fig.16

Fig.17

Fig.18

Fig.19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1111954 B
- DE 4205260 C1

- FR 516793 A